(19) Europäisches Patentamt
European Patent Office
Office européen des brevets

(11) **EP 4 614 109 A1**

(12) **EUROPÄISCHE PATENTANMELDUNG**

(43) Veröffentlichungstag:
**10.09.2025  Patentblatt 2025/37**

(21) Anmeldenummer: **25161316.2**

(22) Anmeldetag: **03.03.2025**

(51) Internationale Patentklassifikation (IPC):
**G01B 11/06** (2006.01)   **G01B 11/24** (2006.01)
**G01B 21/04** (2006.01)   **G01J 3/46** (2006.01)
**G01N 21/25** (2006.01)   **G02B 21/00** (2006.01)

(52) Gemeinsame Patentklassifikation (CPC):
**G01B 11/0608; G01B 11/24; G01B 21/042;**
**G01J 3/46; G01N 21/255; G02B 21/0064;**
G01B 2210/50; G01N 2201/0627

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH MA MD TN**

(30) Priorität: **04.03.2024  DE 102024106211**

(71) Anmelder: **Confokal LLC**
**Charlottesville VA 22903 (US)**

(72) Erfinder: **JURCA, Marius Christian**
**63486 Bruchköbel (DE)**

(74) Vertreter: **Ridderbusch, Oliver**
**Prisma IP**
**Patentanwaltskanzlei**
**Landsberger Straße 155, Haus 1**
**80687 München (DE)**

(54) **CHROMATISCH KONFOKALES HOCHGESCHWINDIGKEITSMESSVERFAHREN UND SKALIERBARE VORRICHTUNG ZUR UMSETZUNG DES VERFAHRENS**

(57)    Ein extrem schnelles optisches Messverfahren kombiniert eine chromatisch konfokale Abstandsmessung mit einer chromatisch konfokalen Farbmessung einer teilweise reflektierenden Prüfoberfläche. Eine entsprechende Messvorrichtung nutzt als Lichtquelle mindestens zwei monochromatische Emitter, insbesondere single- oder multi-mode Laserdioden.

Fig. 3 a)

**Beschreibung**

**Gebiet der Erfindung**

Die Erfindung betrifft ein Verfahren und eine größen-skalierbare Vorrichtung zur äußerst schnellen, berührungslosen Messung von physikalischen Eigenschaften einer zumindest teilweise reflektierenden optischen Grenzfläche eines Objektes, insbesondere zur punktuellen Messung des Abstandes sowie der Farbe, um daraus, bei beweglichen Objekten, topographische Karten der Objektoberfläche zu erstellen, bzw. als Überwachung durch korrelativen Vergleich mit einer zuvor gespeicherten Referenz auszulegen.

**Stand der Technik**

Das Grundmessprinzip der hier vorgestellten Erfindung, sowohl im Bereich der Entfernungsmessung, als auch im Bereich der gleichzeitigen Erfassung der Farbe, ist die der chromatisch konfokalen Mikroskopie, wobei hier eine Innovation darin besteht, dass wesentliche Systemvorteile aus der Nutzung von Systemkomponenten gewonnen wurden, die ansonsten für die bisher bekannten Umsetzungen des chromatisch konfokalen Messprinzips völlig ungeeignet wären.
Die ersten Ansätze sind u.a. in US3,013,467A (1961, M. Minsky) und in "FOCUS-WAVELENGTH ENCODED OPTICAL PROFILOMETER" von G. Molesini et al. (OPTICS COMMUNICATIONS, Volume 49, number 4, 1984) bereits vorgestellt. Die ersten modernen, industriell verfügbaren Abstandsmessgeräte basierend auf diesem Messprinzip wurden durch FR2738343A1 (1995, Joseph Cohen Sabban), bzw. aus dem Aufsatz von M. Jurca et al. (1997, Sensormagazin No.4/97, Seiten 15-18, "Eine Alternative zum Laser") bekannt.
Zwischenzeitlich wurden sehr viele Verfahrensvarianten entwickelt, die hier namentlich nicht vollständig genannt werden können, wobei die physikalisch erforderlichen Merkmale, die aus der rigorosen Umsetzung des chromatisch konfokalen Messprinzips entstehen, nachfolgend zusammengefasst werden.
Eine solche punktuelle Abstandsmessvorrichtung besteht aus:

**a)** Einer polychromatischen, inkohärenten Lichtquelle,
**b)** Einem Objektiv, das eine vergrößerte axiale chromatische Aberration aufweist, in der Fachliteratur "chromatisches Objektiv" oder "Hyperchromat" genannt,
**c)** Einer sehr kleinen Apertur, meistens rund, zur Realisierung der konfokalen Messanordnung, die sowohl vom polychromatischen Licht der Lichtquelle a) in Richtung Objektiv und Messpunkt auf der Objektoberfläche, als auch das entstehende Rückreflex von der Objektoberfläche im Messpunkt, in umgekehrte Richtung durchlässt,
**d)** Einer Vorrichtung zur Trennung des Rückreflexes vom polychromatischen Licht der Lichtquelle,
**e)** Einer spektral auflösenden Lichtintensität-Messvorrichtung zur Analyse des Rückreflexes, wobei die spektral auflösende Lichtintensität-Messvorrichtung jede der verwendeten monochromatischen Wellenlängen separat misst; insbesondere kann sie für die Erfassung jeder der verwendeten monochromatischen Wellenlängen jeweils eine, direkt oder über eine optische Faser gekoppelte, rauscharme Photodiode umfassen.

Das polychromatische Licht (a) wird durch die Apertur (c) vom chromatischen Objektiv (b) so fokussiert, dass alle einzelnen Wellenlängen des polychromatischen Lichtes linear auf der optischen Achse des Objektives zwischen der Brennweite $Z_B$ (für die kürzeste Wellenlänge des polychromatischen Lichts) und der Brennweite $Z_R$ ($> Z_B$) (für die längste Wellenlänge des polychromatischen Lichts), gemäß dem Verlauf der longitudinalen chromatischen Aberration des Objektivs verteilt werden. "B" steht hier sinngemäß für blau und "R" für rot. Wenn das fokussierte polychromatische Licht auf einer optischen Grenzfläche in einer Entfernung $Z_{OBJ}$ ($Z_B < Z_{OBJ} < Z_R$) liegt, entsteht ein punktueller Rückreflex mit der Wellenlänge $\lambda_{OBJ}$, und im Wesentlichen nur mit dieser Wellenlänge $\lambda_B < \lambda_{OBJ} < \lambda_R$ gelangt zurückgeworfenes Licht zurück durchs Objektiv und durch die mit dem Objektbrennpunkt konjugierten (punktförmigen) Apertur, um dann durch die Vorrichtung (d) getrennt und der messenden Vorrichtung (e) zugeführt zu werden. Die kleine Apertur (c) funktioniert wie ein Raum-Filter, der das zurück vom Objekt gestreute Licht nur aus der unmittelbaren axialen und lateralen Umgebung von $Z_{OBJ}$ durchlässt. Alles andere an Licht wird räumlich durch die Empfangsapertur weggefiltert - daraus ergibt sich die hohe Messauflösung des Verfahrens.
Die vorgestellten Fakten haben eine ganze Reihe von zwingenden Folgen, so hängt z.B. die messbare Rückreflexintensität von der Faltung des Diffraktionsintegrals von der Apertur mit der PSF (point-spread-function; Punktspreizfunktion) des Objektivs ab, die wiederum hauptsächlich von der NA (numerischen Apertur) des Objektives abhängt, so dass der verständliche Wunsch besteht, eine möglichst hohe NA zu haben, denn das führt zu einer Verbesserung der erzielbaren Messauflösung. Aus demselben Grund wird der Durchmesser der Apertur klein gehalten. Ebenso hat das chromatische Objektiv üblicherweise vier bis sechs Linsen, um einen möglichst kleinen Brennpunkt, frei von sphärischen Aberrationen zu erzeugen. Es sind folgende Varianten des chromatischen Objektivs bekannt:

**b1.** Mehrlinsen-Hyperchromat, der die Apertur direkt auf das Objekt fokussiert,
**b2.** Kombination von einer Kollimationslinse (Achromat) mit einem Mehrlinsen-Hyperchromat,
**b3.** Verwendung einer einzigen Fresnel-Linse als Hyperchromat (ähnlich wie b1),
**b4.** Verwendung einer Linsenkombination mit einer Fresnel-Linse (ähnlich wie b2),
**b5.** Verwendung einer Gradindex-Linse (ähnlich wie b1),
**b6.** Verwendung einer Linsenkombination mit einer Gradindex-Linse (ähnlich wie b2).

Die Varianten b3 bis b6 führen für gewöhnlich, in vergleichbaren Anordnungen, zu größeren Brennfleck-Durchmessern.

Ferner ist es verständlich, dass die Lichtquelle nicht monochromatisch, oder bestehend aus mehreren monochromatischen Quellen sein kann, denn jede monochromatische Quelle würde vom Objektiv in einen einzigen Punkt fokussieren und zwischen zwei benachbarten solchen Punkten würde man die Entfernung nicht messen können.

Als polychromatische Lichtquelle sind einige Varianten bekannt:

**a1.** Halogen-Lampe,
**a2.** Hochdruck-Lampe,
**a3.** LEDs oder SLEDs (super-luminiscent-emitting-diodes),
**a4.** Laser-generiertes Continuum-Spektrum.

Das inkohärente Licht der polychromatischen Lichtquelle stellt einen der wichtigsten Gründe der vielseitigen Einschränkungen des Verfahrens dar, insbesondere der Messgeschwindigkeit, der maximal zur Verfügung stehenden Lichtleistung und dem dadurch begrenzten SNR-Wert (signalnoise-ratio).

Die Trennvorrichtung des Rückreflexes wird hauptsächlich in zwei Varianten angeboten:

**d1.** Als "Y"- oder "X"-förmiges Spleiß-Kopplers mit Grad-Index optischen Fasern,
**d2.** Mit optischen makro-Komponenten wie Strahlteiler oder Strahlteilerwürfel, Filter, Lochblenden, etc.

Die Messvorrichtung ist für gewöhnlich ein optisches Spektrometer, wobei die wellenlängen-mäßige Lage des Rückreflexes mit einer CCD-Zeile (charge-coupled-device) ermittelt wird. Diese stellt auch, in den meisten Fällen, den begrenzenden Messgeschwindigkeitsfaktor dar.

Aus DE 10 2008 029 459 B4 und WO 2009153067 A2 (2008, M. Jurca) ist ein Ersatz der spektralen Messvorrichtung (d), in der Form einer einzigen Photodiode, und die damit verbundene Verwendung von zwei alternierend eingeschalteten LEDs als polychromatische Lichtquelle, wobei die Abstrahlspektren der beiden LEDs teilweise überlappen. Das vorgestellte Verfahren ist durch das Wegfallen des optischen Spektrometers sehr einfach und vor allem sehr viel schneller (mehrere Größenordnungen).

Alle bekannten Messverfahren und Vorrichtungen, die direkt, ohne eine relative Bewegung zwischen Messvorrichtung und Messobjekt während eines Messvorganges eine bildgebende Ausgabe der Messdaten als Ziel haben, oder solche, die eine Fourier-mäßige Verarbeitung der Messdaten aufgrund der Interferometer- Struktur der Messvorrichtung voraussetzen, wurden hier nicht berücksichtigt, weil sie mit der vorliegenden Erfindung nicht konkurrieren. Ebenso wurden keine Lasermessverfahren berücksichtigt, die nicht auf dem chromatisch konfokalen Messprinzip basieren.

DE 10 2004 022 454 A1 beschreibt ein optisches Messgerät zum Vermessen der Form oder Rauheit eines Werkstückes, wozu ein Differenzsignal von zwei Fotoempfängern, die verschiedenen Brennpunkten zugeordnet sind, ausgewertet wird. DE 10 2006 026 775 A1 offenbart eine Vorrichtung mit mehreren LEDs als polychromatische Lichtquelle zur Beleuchtung einer zu untersuchenden Oberfläche über eine Lichtleitfaser und ein Fokussierelement, wobei zurückgeworfenes Licht über das Fokussierelement und die Lichtleitfaser zu einem Strahlteiler gelangt, welcher das nachzuweisende Licht über ein Dispersionselement zu einer Detektoreinheit lenkt. DE 20 2019 103 527 U1 beschreibt eine optische Messvorrichtung mit konfokalchromatischem, optischem Sensor. US 5 785 651 A offenbart ein konfokalmessendes Mikroskop, wobei mehrere Laser als polychromatische Lichtquelle verwendet werden und ein hierfür geeignetes chromatisches Objektiv genutzt wird.

**Kurzfassung der Erfindung**

Aufgabe der Erfindung ist es, ein Verfahren sowie eine Vorrichtung zur schnellstmöglichen, gleichzeitigen berührungslosen Messung des Abstandes und der Farbe zu einer teilweise reflektierenden optischen Grenzfläche anzugeben, die in der Lage sind, das chromatisch konfokale Messprinzip der Entfernung zu einem Punkt auf der zu messenden Oberfläche derart zu verändern, dass die Verwendung von mehreren monochromatischen Lichtquellen, anstelle der sonst erforderlichen polychromatischen Lichtquellen, ermöglicht wird, so dass aufgrund der viel höheren verfügbaren und verwendbaren Lichtleistung viel bessere Signal-Rausch-Verhältnisse bei erheblich höheren Messgeschwindigkeiten, als mit den bekannten Verfahren erzielt werden können, und wodurch die Vorrichtungen zur Durchführung des Verfahrens (fast) beliebig skalierbar sind und gleichzeitig die Erfassung der Messobjektfarbe ermöglichen.

Die Aufgabe wird durch die Gegenstände der unabhängigen Ansprüche gelöst.

Ein erfindungsgemäßes Verfahren, das die vorgenannte Aufgabe löst, weist folgende Schritte auf:

**a)** Erzeugen von multi-spektralem Licht (110), bestehend aus zwei oder mehr, gepulst oder dauer-betriebenen monochromatischen Lichtquellen (101a, b, c), beispielsweise drei (z.B. RGB-Laserdioden-Modul), mit 40-120nm auseinander liegenden Abstrahlwellenlängen, die leistungs- und temperaturmäßig so geregelt werden, dass die Verhältnisse der Leistungen der monochromatischen Lichtquellen aktiv konstant gehalten werden [über Feedback Alternative 1 (Modul 200), Alternative 2 (300) oder Alternative 3 (400)],

**b)** Einkoppeln des Lichtes (110) in ein Arm eines 2:1 - Y- Faserkopplers (30) über eine optomechanische Steckvorrichtung (107 und 36), wobei die optische Faser (32) sowohl als Gradindex- oder vorzugsweise Stufenindex-Multimode-Faser bzw. Multimode Circulator ausgelegt ist, und vorzugsweise einen verhältnismäßig großen Kerndurchmesser von 50-200µm aufweist, was im starken Widerspruch (beide o.g. Fakten) zu den bereits bekannten Vorrichtungen steht, wobei die gemeinsame Ausgangsfaser über einen FC/APC-Faser-Stecker (35 und 803) in das chromatische Messobjektiv #1 (800) gekoppelt ist, (wobei FC/APC einen Faserverbinder, englisch: fiber connector, mit abgewinkelter Endfläche, englisch: angled physical contact, zur Erhöhung der Rückflussdämpfung bezeichnet),

**c)** Fokussieren des multi-spektralen Lichtes über das chromatische Messobjektiv #1 (800) mit kleiner numerischen Apertur (NA), vorzugsweise 0.03 bis 0.15, über eine einfache Kombination von optischen Komponenten (801), vorzugsweise zwei koaxialen und räumlich getrennten (801a, b), die zusammen eine vergrößerte longitudinale chromatische Aberration aufweist, (was in Widerspruch zu den bereits bekannten Vorrichtungen steht, da ein solches Objektiv üblicherweise eine möglichst große NA aufweist und 5-6 Linsen für die vergrößerte longitudinale chromatische Aberration benötigt,) so dass die möglichst kleinen Foki der einzelnen monochromatischen Lichtquellen in unterschiedlicher Entfernung auf der optischen Achse des Objektives liegen (zwischen den Fokalebenen 11 und 12, nach der Strahlumlenkung durch den Strahlteiler 15), wobei der Rückreflex von einer Objektoberfläche (Fokalebene 10), die zwischen den Foki der kleinsten und der größten verwendeten monochromatischen Lichtquelle liegt, zurück über das Objektiv und den Y-Faserkoppler an seinem zweiten Arm (33) mit dem Messmodul (500) erfasst werden kann, wobei die Auslegung des Objektives in Verbindung mit dem Y-Faserkoppler dafür sorgt, dass trotz des großen Wellenlängen-Abstandes zwischen zwei benachbarten monochromatischen Lichtquellen, die Bessel-Funktionmäßigen axialen, monochromatischen Rückreflexe (hier "Glockenkurven" genannt) leistungsmäßig teilweise überlappen,

**d)** Umlenken des fokussierten Messstrahls vom chromatischen Objektiv #1 (800), vorzugsweise um 90° auf die zu messenden Objektoberfläche mit Hilfe eines leicht keilförmigen, antireflex- beschichteten Strahlteilers (15), der ein Reflexion/ Transmissionsratio von mindestens 50 oder mehr -% aufweist, so dass ein entsprechender Teil des vom Objekt reflektierten Lichts durch den Strahlteiler in eine zweite, identische chromatische Einheit von optischen Komponenten (601), wie die des Objektivs #1 (801) vom Schritt c) gelangt, die die monochromatischen Komponenten des Rückreflexes wieder zusammen in einem kollimierten Strahl fügt und die chromatischen Komponenten des Strahls in Deckung bringt (604), so dass die Entfernungsinformation durch das Wegfallen einer Apertur verlorengeht und stattdessen die Verhältnisse der messbaren monochromatischen, reflektierten Leistungen die Farbinformation der Objektoberfläche enthalten und mit der Farbmessvorrichtung (606) gemessen wird, wobei die besondere chromatische Strahlführung im Bereich der Objektoberfläche auch eine verbesserte Erfassung von teils transluziden Objektoberflächen ermöglicht,

**e)** Schnelle, spektral selektive (über einen holographischen Gitter 504) hoch-dynamische Erfassung der monochromatischen Komponenten des Rückreflexes gemessen am zweiten Arm des Y-Faserkopplers (33) mit ausgesuchten einzelnen rauscharmen Photodioden (509a, b, c), die im Wellenlängenbereich der verwendeten monochromatischen Lichtquellen eine ausreichende Empfindlichkeit und Reaktionsgeschwindigkeit aufweisen,

**f)** Berechnen des Messabstandes aus den spektral selektiv gemessenen Leistungen der monochromatischen Rückreflex-Komponenten vom Schritt e),

**g)** Schnelle, spektral selektive hoch-dynamische Erfassung der monochromatischen Komponenten des Rückreflexes gemessen koaxial hinter der zweiten chromatischen Kombination von optischen Komponenten (606),

**h)** Berechnen der Farbinformation aus den spektral selektiv gemessenen Leistungen der monochromatischen Rückreflex-Komponenten vom Schritt d), wobei die gleichzeitig gewonnene Entfernungsinformation mit zur Bewertung der Farbinformation verwendet wird.

Der Strahlteiler kann zur Vermeidung von Reflexen und/oder Etalon-Effekten (Interferenz-Effekte zwischen parallelen Flächen einer optischen Komponente) als keilförmiger Strahlteiler ausgelegt wird, insbesondere mit einem Keilwinkel von 0.5°.

Ein erfindungsgemäßer Sensor bzw. eine erfindungsgemäße Vorrichtung ist zur Durchführung des erfindungsgemäßen Verfahrens eingerichtet und enthält die zum Verfahren genannten Komponenten. Optional ist der Sensor / die Vorrichtung zur Durchführung der vorliegend beschriebenen Verfahrensvarianten eingerichtet.

Bei einem erfindungsgemäßen Abstandsmessverfahren nach dem Prinzip der chromatisch konfokalen Entfernungsmessung wird eine polychromatische Lichtquelle genutzt, die aus mehreren single-mode oder multi-mode, gepulst- oder dauer-betriebenen Laserdioden besteht. Das so gewonnene Licht wird in einen multi-mode "Y"- oder "X"-förmigen Faserkoppler fokussiert, welcher einen Faserkerndurchmesser größer 50 μm hat. Eine Ausgangsfaser des Faserkopplers wird über einen FC/APC-Faserstecker in ein hyperchromatisches Objektiv eingeführt. Hierbei bezeichnet ein FC/APC-Faserstecker einen Faserverbinder; englisch: fiber connector, FC, mit abgewinkelter Endfläche, englisch: angled physical contact, APC, von 8°, zur Erhöhung der Rückflussdämpfung. Das hyperchromatische Objektiv besteht aus einem Kollimationsachromat und einer hyperchromatischen Kombination von vorzugsweise nur zwei optischen Komponenten (insbesondere eine refraktive Linse und eine diffraktive Linse / Fresnel-Linse), die zusammen ein "chromatisches Objektiv" mit einer kleinen numerischen Apertur NA formt. Für ein ausreichendes Überlappen der Rückreflex-Gaußkurven gilt insbesondere NA ≤ 0.3. Das Verhältnis der longitudinalen Aberration und der Brennweite der hyperchromatischen Kombination liegt zwischen 0,15 bis 0,5 und die longitudinale Aberration der hyperchromatischen Kombination deckt den Wellenlängenbereich des verwendeten Lichts ab. Ein entstehender Rückreflex gelangt von einer optischen (zumindest) teilweise reflektierenden Messobjektoberfläche, die üblicherweise auch als "optische Brechungsindex-Trennfläche" bezeichnet wird und annähernd senkrecht zur optischen Achse zwischen den Foki der kürzesten und längsten verwendeten Laserdioden-Wellenlänge liegt, über das chromatische Objektiv zurück in den Faserkoppler und wird über eine Messausgangsfaser des Faserkopplers einer spektral-auflösenden, Lichtleistung-messenden Vorrichtung zugeführt. Für die Erfassung jeder der verwendeten monochromatischen Wellenlängen wird jeweils eine einzige rauscharme Photodiode verwendet. Unter rauscharmen Photodioden können Si-„PIN" Photodioden verstanden werden bzw. Photodioden mit einer rauschäquivalenten Strahlleistung NEP (noiseequivalent-power) von

$$NEP < 5x10^{-14}[\frac{W}{\sqrt{Hz}}]$$ .

Der vorgenannte Faserkoppler ist vorzugsweise als "Multi-mode Circulator" ausgelegt. Ein MM-Circulator ist ein "Y"-Faser-Koppler mit einer besseren Trennung der Sende- und Empfangsleistung, so dass der störende Rückreflex aus dem Koppler, üblicherweise "optisches Rauschen" genannt, minimiert wird. Solche Faser-Komponenten sind aus dem Single-Mode-Faser-Bereich bekannt und nur vor kurzer Zeit auch für STIN-Faser verfügbar. Es sind außerdem keine CCM-Verfahren (CCM: chromatisch konfokale Entfernungsmessung, eigentlich: chromatic-confocal-microscopy) bekannt, die einen STIN-Faser-Circulator verwenden.

Die Angabe einer "annähernd senkrecht" stehenden Messobjektoberfläche betrifft die Notwendigkeit, dass die Normale auf der Objektoberfläche gerade noch von der Optik-Apertur (~ Durchmesser der letzten Objektiv-Linse) erfasst sein muss. Somit wird für eine Messung auf einer spiegelnden Oberfläche die maximale Neigung der Objektoberfläche im Messpunkt relativ zur optischen Achse des Objektivs nur 90° ±arctan(NA) betragen (z.B. für NA=0.1 => 90°±5.74°). Wenn die Objektoberfläche eher streuend ist, kann die Messung auch bei größeren Verkippungen erfolgen, da genügend Streulicht vom Objektiv erfasst wird. Diese Grenze "annähernd senkrecht" ist direkt abhängig von der NA des Objektivs.

Optionale Varianten des erfindungsgemäßen Verfahrens und des erfindungsgemäßen Sensors/Vorrichtung sind in den abhängigen Ansprüchen und der folgenden Beschreibung erläutert. Weitere Varianten des Verfahrens ergeben sich durch die bestimmungsgemäße Verwendung der beschriebenen Vorrichtung. Umgekehrt kann die Vorrichtung / der Sensor zur Ausführung der beschriebenen Verfahrensprozesse eingerichtet sein. Insbesondere kann hierfür eine elektronische Steuereinrichtung vorhanden sein, welche zur Ansteuerung beschriebener Lichtquellen und Detektoren/Messeinrichtungen und zur Signalverarbeitung und -analyse eingerichtet ist, um die beschriebenen Prozesse umzusetzen.

**Kurzbeschreibung der Figuren**

Weitere Wirkungen und Merkmale der Erfindung werden nachstehend mit Bezug auf die beigefügten schematischen Figuren beschrieben:

**Figur 1:** Monochromatische Rückreflexe gewonnen über ein Standard-CCM-Objektiv hoher NA (5 Linsen, NA=0.45) überlappen nicht und können deshalb mit dem neuen Messverfahren nicht ausgewertet werden.

**Figur 2:** Monochromatische Rückreflexe gewonnen über ein CCM-Objektiv niedriger NA (2 Linsen, NA=0.11), gemäß dem neuen Messverfahren, überlappen selbst bei 70nm-Abstand bzw. 114nm-Abstand der hier beispielhaft gezeigten RGB (rot-grün-blau) Wellenlängen.

**Figur 3 a):** schematische Übersicht eines erfindungsgemäßen Sensors, umfassend den Abstandssensor "Sensor D" 800, Farbsensor "Sensor F" 600, Strahlteiler 15 und Signalauswertung "Sensor P", mit dieser Bezeichnung als Gesamtbegriff für alle Komponenten der Signalaufnahme und -auswertung (wie die Baugruppen 100, 200, 300, 400, 500 und deren Alternativauslegungen).

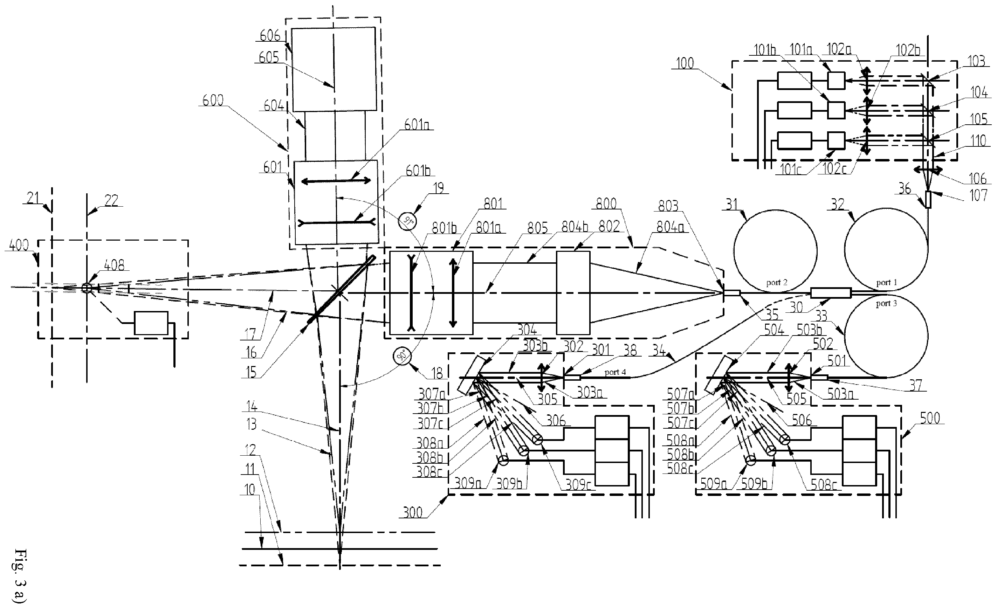

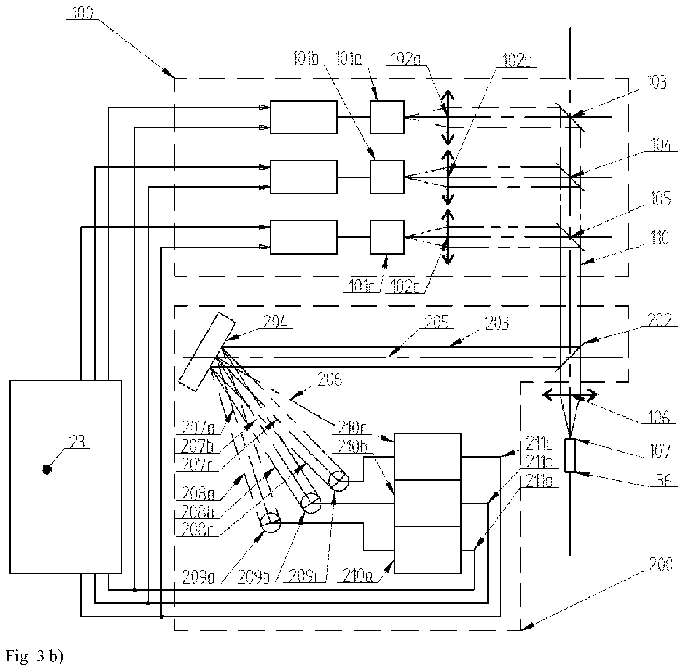

**Figur 3 b):** schematische Detail-Übersicht der Lichtquelle 100 eines erfindungsgemäßen Sensors, beispielhaft als RGB-Lichtquelle dargestellt zusammen mit der "Alternative 1" der Referenzmessung der Lichtquelle 200 benutzt als aktive Rückführung und Regelung der Lichtquelle.

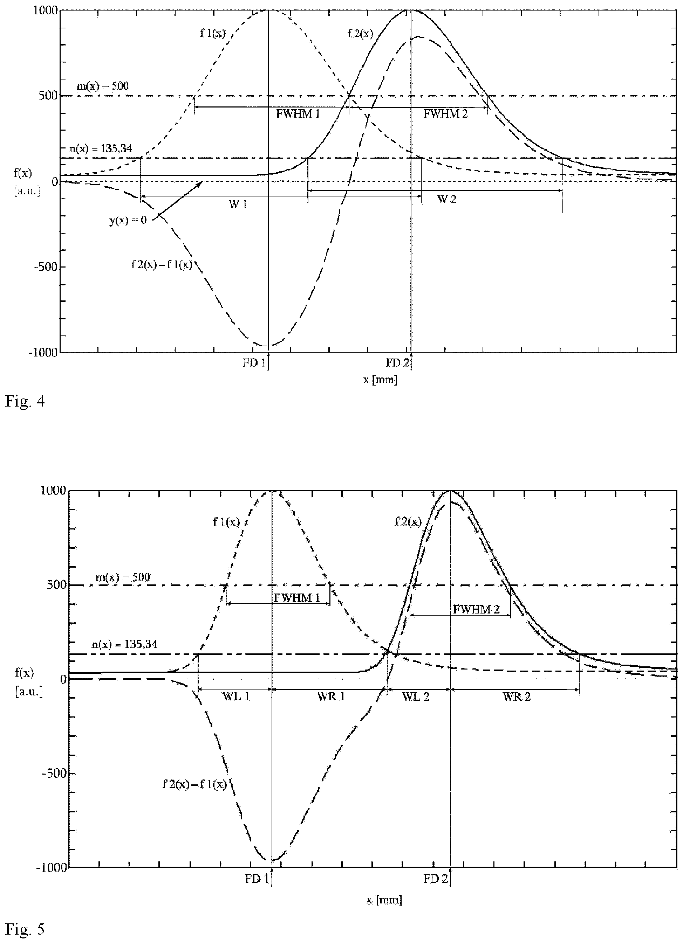

**Figur 4:** Optimal gewählte Laser-Wellenlängen generieren mit dem neuen Messverfahren "Glockenkurven", die sich idealerweise bei annähernd 50% der Maximalamplitude überlappen.

**Figur 5:** Der Grenzfall der Auswahl zweier benachbarten Laser-Wellenlängen liegt gemäß dem neuen Messverfahren vor, wenn die entstehenden "Glockenkurven" bei $1/e^2$ (= 135.34 ausgehend vom normierten Wert der Amplitude = 1000) der Maximalamplitude überlappen.

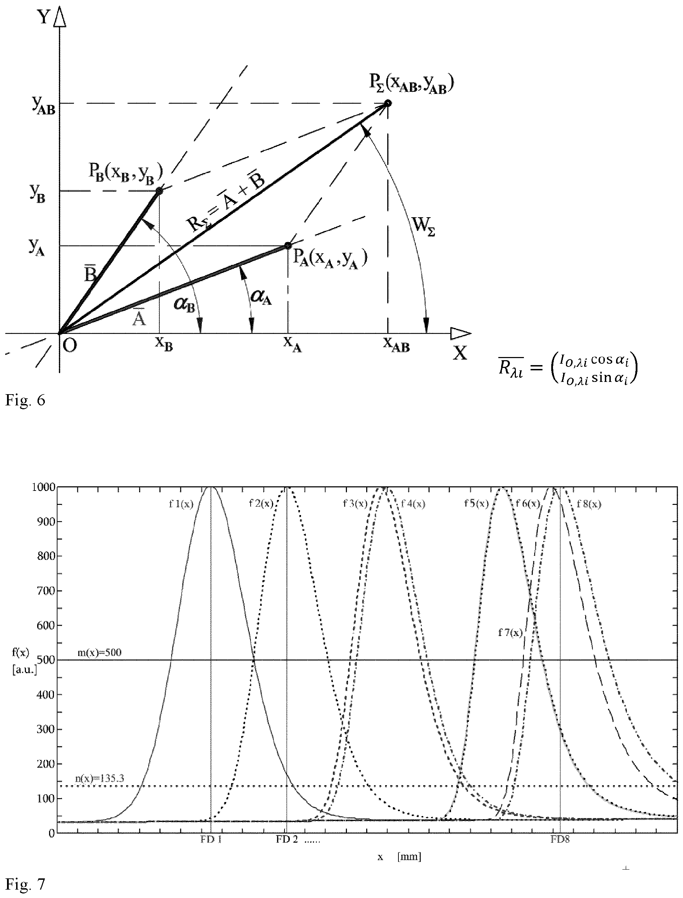

**Figur 6:** Skizze der Vektoraddition zur Darstellung der verwendeten Nomenklatur.

**Figur 7:** Typische rechtsschiefe "Glockenkurven", die normierte z-Achs-bezogene Rückreflex-Intensitätsverläufe in Abhängigkeit von deren Wellenlängen zeigen; Fokusentfernungen ("focal distances" FD) FD1<FD2< ... <FD8 entsprechen den Wellenlängen $\lambda$1<$\lambda$2< ... < $\lambda$8

$$WP(x) = W_\Sigma(z) = \arctan\frac{y_\Sigma}{x_\Sigma}$$

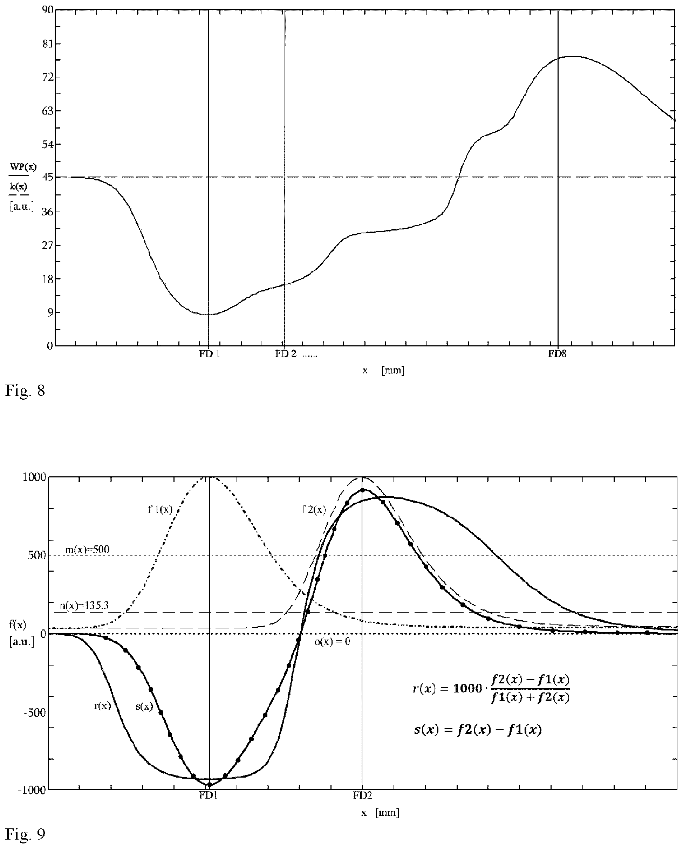

**Figur 8:** Das Ergebnis der beanspruchten Formel zur Ermittlung der Sensorkennlinie basierend auf den Signalen von **Fig. 7,** wobei $FD_i$ die z-Lage der einzelnen Foki anzeigen.

**Figur 9:** Die Verwendung der "Kontrast-Funktion" [$r(x)$] erhöht lokal die Messauflösung, reduziert aber den praktisch auswertbaren Messbereich.

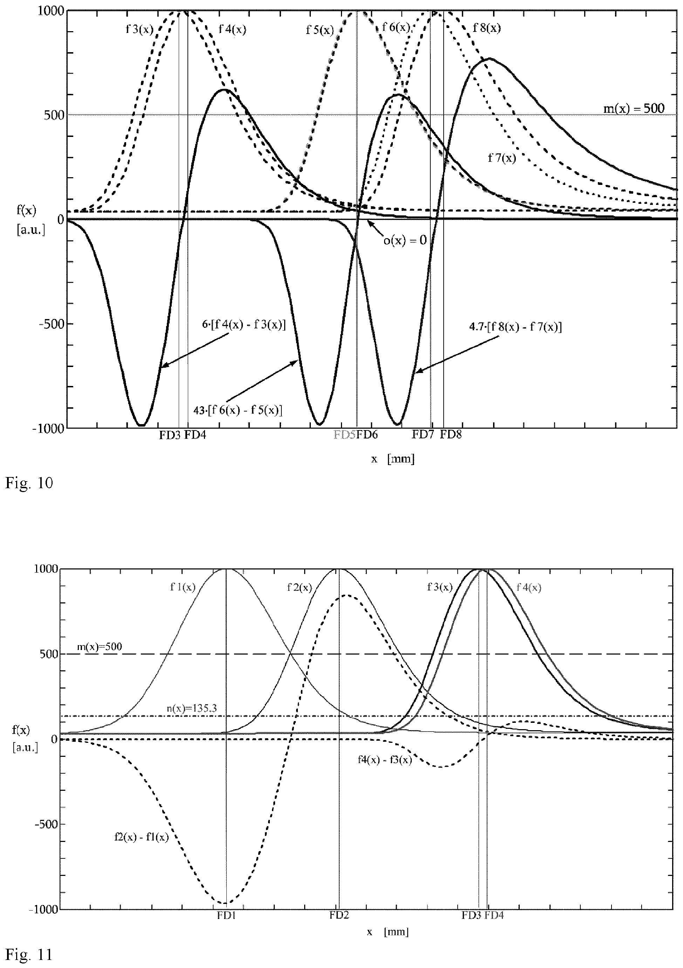

**Figur 10:** Die paarweise Subtraktion der dicht benachbarten Glockenkurven mit anschließender Normierung zeigt, dass die Steigung der resultierenden Kennlinien weitestgehend unabhängig vom Wellenlängen-Abstand der entsprechenden Laser-Wellenlängen ist, wobei jedoch bei abnehmenden Wellenlängenabstand - durch die beinahe Auslöschung der beteiligten Glockenkurven - für die anschließende Signalverarbeitung eine zu geringe Signalamplitude übrigbleibt.

**Figur 11:** Die paarweise Subtraktion der benachbarten Glockenkurven, ohne anschließende Normierung, zeigt die Amplitude der resultierenden Kennlinien $f2(x) - f1(x)$ für $\lambda$2 - $\lambda$1 = 45$nm$ und $f4(x) - f3(x)$ für $\lambda$4 - $\lambda$3 = 5$nm$, wobei $x$ = Messabstandsachse.

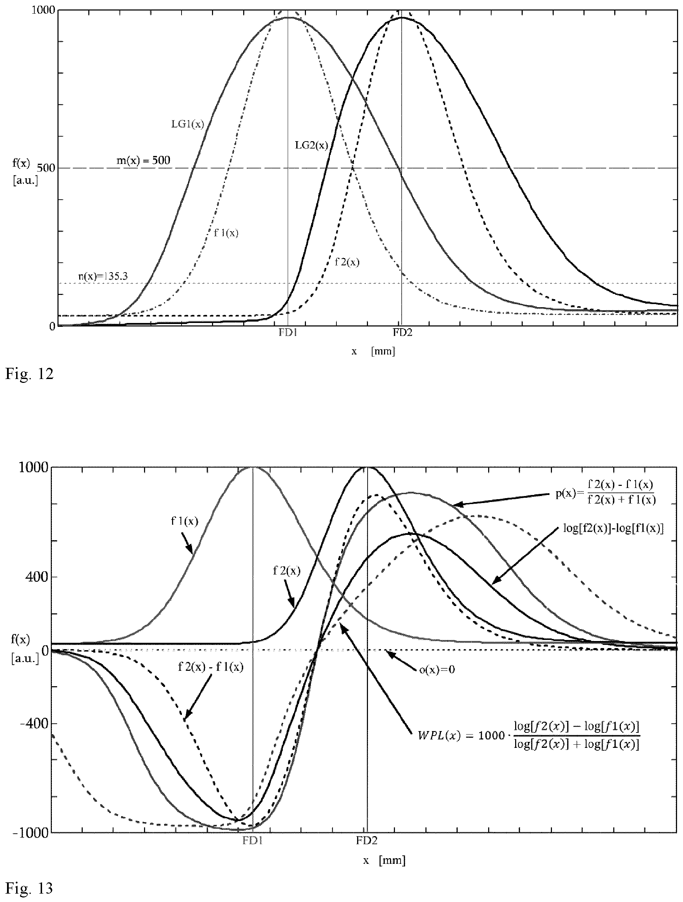

**Figur 12:** Die graphische Überlagerung der Glockenkurven von $\lambda$1 (um FD1) und $\lambda$2 (um FD2), als gestrichelte Linien und logarithmisch als volle Linien (normiert auf etwa 1000), zeigt, dass das Logarithmieren den Schnittpunkt der Glockenkurven bei ca. 80% $I_0$ statt ca. 50% $I_0$ für die linearen Messdaten, scheinbar vorteilhaft, verschiebt.

**Figur 13:** Die steilsten Kennlinien mit der höchstmöglichen Messauflösung werden mit der Differenzmessung zweier linear erfasster Glockenkurven erreicht; Alle anderen Auswerte-Methoden sind im linearen mittleren Bereich weniger steil.

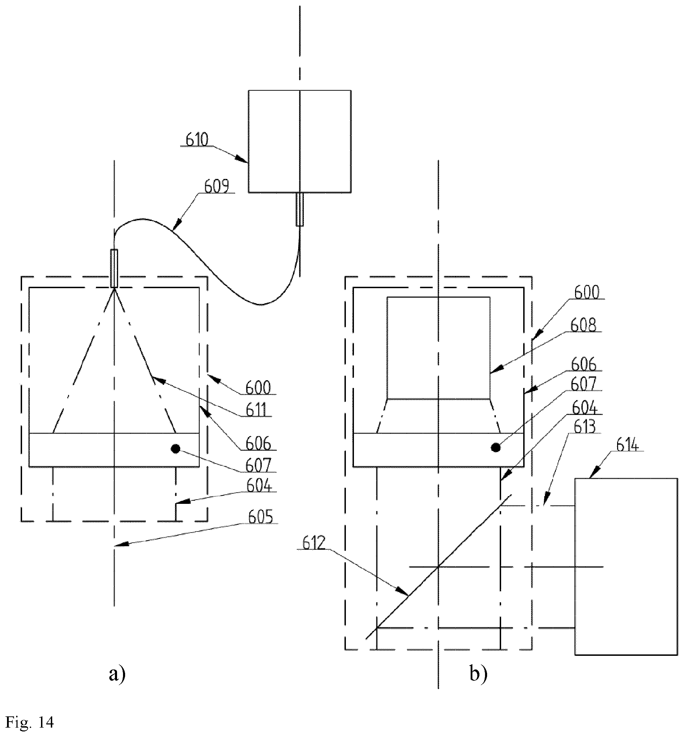

**Figur 14:** a) links: Verwendung eines fasergekoppelten spektral-auflösenden Messmoduls 610 und b) rechts: Verwendung eines 2D-Farbmesspunkt-Array oder einer CCD-Kamera 608; es ist auch die Option eines Moduls 614 zur Messung der Reflektivität der Objektoberfläche schematisch dargestellt, wobei dieses Modul auch im Bild links ergänzt werden kann.

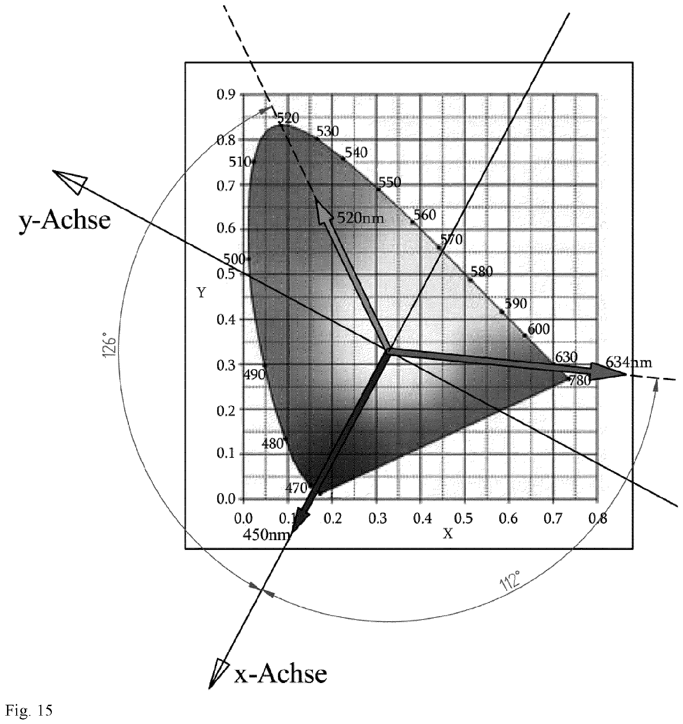

**Figur 15:** CIE-"Farbendreieck" = "Schuhsohlen-Diagramm" mit beispielhaften Angaben $\lambda_1 = 450nm$, $\lambda_2 = 520nm$, $\lambda_3 = 634nm$ => $\beta_1 = 0°$, $\beta_2 = 126°$, $\beta_3 = 248°$

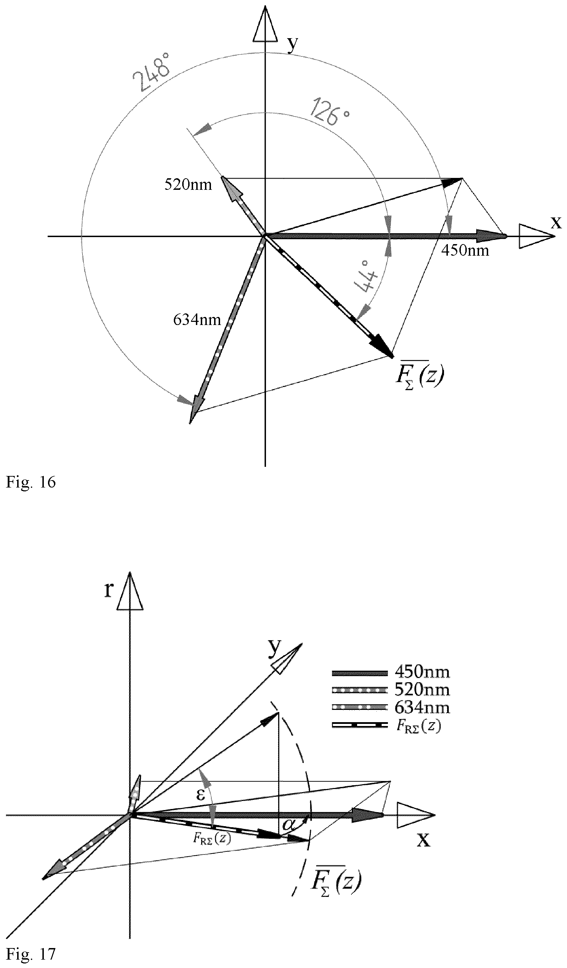

**Figur 16:** Positionierung der Farb-Vektoren aus dem Beispiel in Fig. 15, sowie der resultierende Vektor $\overline{F_\Sigma(z)}$ in der xy-Ebene

**Figur 17:** Schematische Konstruktion der resultierenden Farbkennzahl, d.h. des Farb-Messergebnisses $F_{R\Sigma}(z)$ in

Abhängigkeit von der gemessenen Reflektivität R(z). Der Winkel $\alpha$ ergibt sich aus der Vektoraddition, da die Winkel der "Farb-Vektoren" durch **Fig. 15** und der jeweiligen Wellenlänge vorbestimmt sind. Je mehr Wellenlängen, desto genauer wird auch die Farbinformation werden. Die Kalibrierung der Farbmessung wird gleichzeitig zu einer Umrechnungstabelle führen für andere Farbinformations-Formate.

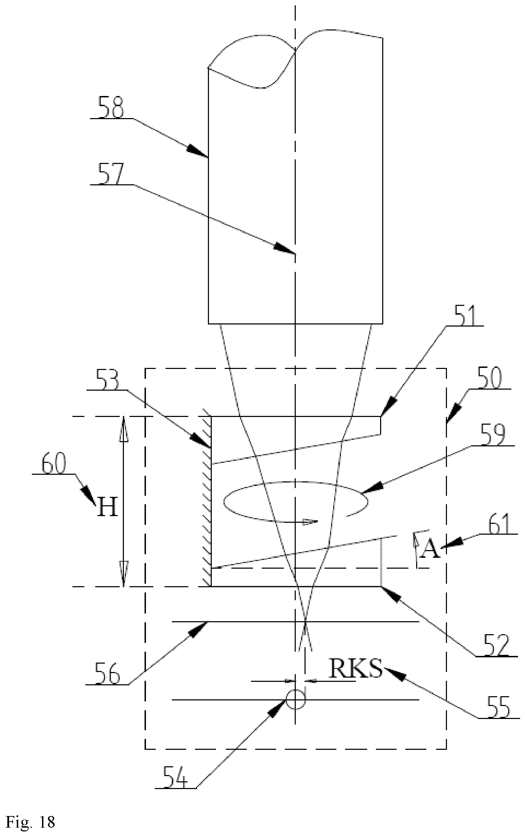

**Figur 18:** Schematische Schnittzeichnung des telezentrischen Kreis-Scanners (50); Draufsicht der Brennfleck-Bahn auf der Objektoberfläche "RKS" (55). Apex-Winkel "A" (61) der runden keilförmigen Prismen (51, 52); Axialer Abstand "H" (60) der keilförmigen Prismen (51, 52).

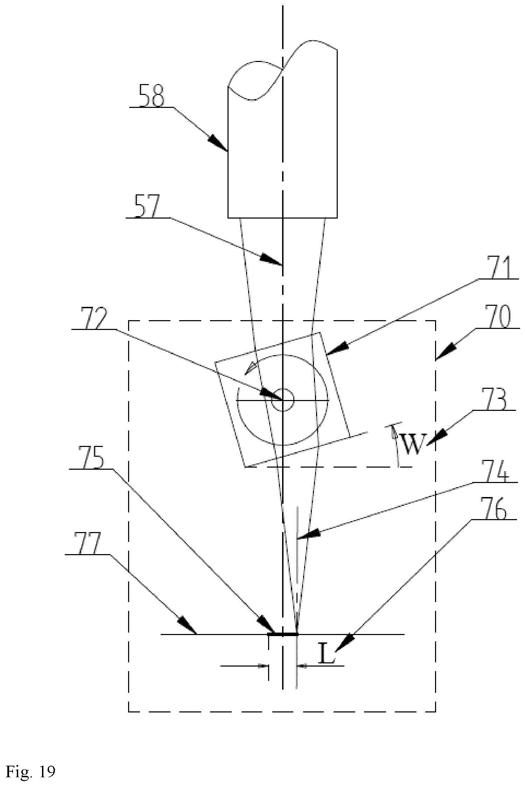

**Figur 19:** Schematische Schnittzeichnung des telezentrischen Linien-Scanners (70); Brennfleck-Bahn auf der Objektoberfläche mit der Länge "L" (76). Drehwinkel "W" (73) des würfelförmigen Prismas (71).

**Detaillierte Beschreibung von Ausführungsbeispielen**

Verschiedene Ausführungsbeispiele werden nachstehend mit Bezug auf die Figuren beschrieben. Gleiche und gleich wirkende Bestandteile sind in der Regel mit denselben Bezugszeichen gekennzeichnet.

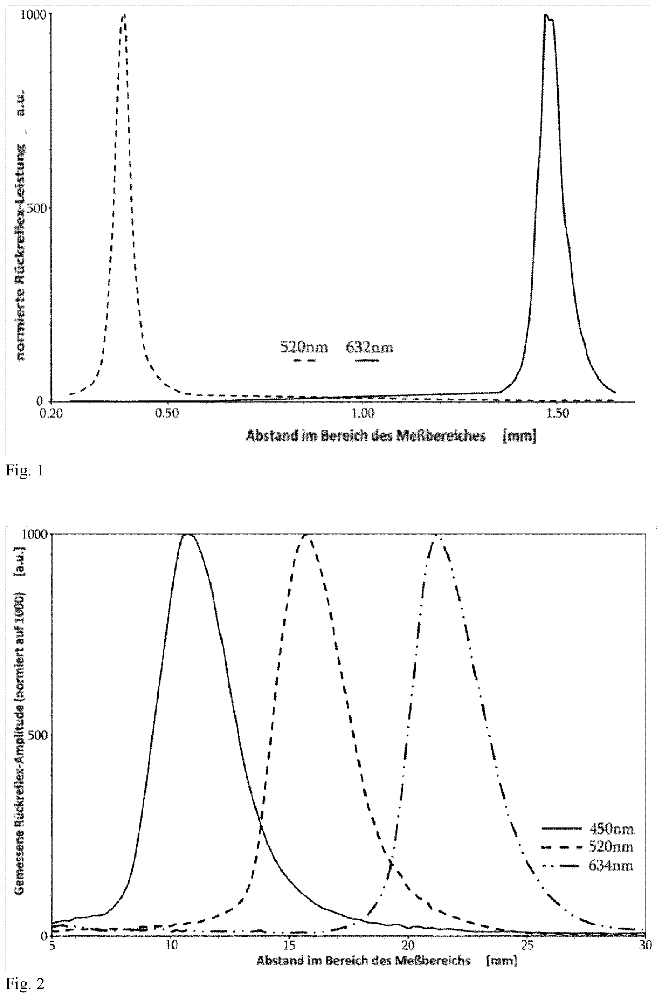

Die **Figuren 1** und **2** verdeutlichen, mit gemessenen Signalen, den Unterschied im Rückreflexverlauf im Falle eines wünschenswerten Hi-NA Objektives gemäß der SoA-Technologie **(Fig. 1)** und im Falle des hier beanspruchten Objektives mit kleiner NA **(Fig. 2),** wenn als Lichtquellen Laserdioden, gemäß der vorliegenden Erfindung, verwendet werden. Die Verwendung eines "perfekt" designten Objektivs zur Umsetzung des SoA-CCM-Verfahrens zusammen mit ansonsten ungeeigneten monochromatischen Lichtquellen, die für das neue Verfahren essentiell wichtig sind, führt zu sehr schmalen Rückreflexen, die weit auseinander liegen, nicht überlappen und deshalb mit dem neuen Messverfahren auch nicht ausgewertet werden könnten. Je besser das Objektiv, im Sinne einer beugungsbegrenzten Abbildung, desto schmaler die Rückreflexe.

Die Abszisse gibt in den **Figuren 1** und **2** einen Abstand einer Objektoberfläche vom (chromatischen) Objektiv an. Beleuchtungslicht wird vom chromatischen Objektiv abhängig von der Wellenlänge des Lichts auf einen bestimmten Abstand fokussiert. Je nach Messsituation kann sich eine zu untersuchende Objektoberfläche in oder außerhalb der Fokusebenen der Beleuchtungswellenlängen befinden. Von der Objektoberfläche zurückgeworfenes Licht kann über das chromatische Objektiv zu einer Lichtleistung-messenden Vorrichtung gelangen. Je höher die numerische Apertur des verwendeten Objektivs ist, desto kleiner ist der Abstandsbereich, für welchen Licht einer monochromatischen Lichtquelle zu messbaren Rückreflexen führt. Die Ordinate in den **Figuren 1** und **2** gibt die messbare Lichtleistung von Rückreflexen (normiert auf eine willkürliche Einheit) an. Bei dem Objektiv hoher numerischer Apertur aus **Fig. 1** führt eine Beleuchtungswellenlänge nur zu einem schmalen Abstandsbereich, in welchem eine Objektoberfläche einen messbaren Rückreflex erzeugt. Der Rückreflex hat somit eine schmale Glockenform und die Rückreflexe verschiedener Beleuchtungswellenlängen (520nm und 632nm in **Fig. 1**) überlappen nicht. Eine Aussage über einen Objektabstand ist in **Figur 1** für den Abstandsbereich zwischen den beiden nicht-überlappenden Glockenkurven nicht möglich. Im Gegensatz hierzu wird bei **Fig. 2** ein chromatisches Objektiv kleinerer numerischer Apertur verwendet, wodurch monochromatisches Beleuchtungslicht zu einem Rückreflex mit breiterer Glockenform führt. Außerdem überlappen die Glockenkurven der Rückreflexe zu den verwendeten Beleuchtungswellenlängen. Dadurch wird ein kontinuierlicher Abstandsmessbereich geschaffen. Dieser Messbereich erstreckt sich bei **Figur 2** im Wesentlichen vom Abstand, bei dem der Rückreflex der kleinsten verwendeten Beleuchtungswellenlänge messbar ist, bis zu dem Abstand, bei dem der Rückreflex der größten verwendeten Beleuchtungswellenlänge messbar ist. In **Figur 1** hingegen ist ein verwendbarer Messbereich in Ermangelung überlappender Rückreflex-Glockenkurven unterbrochen und auf die schmalen Breiten der Glockenkurven beschränkt.

Das *verwendbarer Meßbereich* Verhältnis $\dfrac{verwendbarer\ Me\ss bereich}{Brennweite\ der\ k\ddot{u}rzesten\ Wellenl\ddot{a}nge}$ beträgt in der **Figur 1** gerade 0,0314 bei einem Wellenlängen-Abstand zwischen $\lambda_2$ (volle Linie) und $\lambda_1$ (gestrichelte Linie) von 112nm.

Im direkten Vergleich zeigt die **Figur 2** beispielhaft einen Verlauf der Rückreflexe mit dem Messabstand (x), der mit dem Objektiv der Erfindung gemessen wurde, wobei zwischen dem Rückreflex mit $\lambda_3$ (Strich-zwei-Punkt Linie) und $\lambda_2$ (gestrichelte Linie) ein vergleichbarer Wellenlängen-Abstand (zu dem von Figur 1) von 114nm vorliegt. Das Verhältnis $\dfrac{verwendbarer\ Me\ss bereich}{Brennweite\ der\ k\ddot{u}rzesten\ Wellenl\ddot{a}nge}$ beträgt hier jedoch ca. 0.4, wobei nur ca. 0.12 in der **Figur 2** tatsächlich praktisch verwendet wird.

Für eine herkömmliche "gute Messvorrichtung" gemäß dem SoA (state-of-the-art) chromatisch konfokalen Messprinzip ist es zwingend erforderlich, ein Objektiv mit einem möglichst hohen NA-Wert einzusetzen (numerische Apertur), was man mit vielen Linsen erreicht, um alle anderen Aberrationen zu verkleinern und die longitudinale chromatische Aberration möglichst zu linearisieren und zu vergrößern, und es ist auf keinen Fall, aus zwei Gründen möglich, Laserdioden als Lichtquelle in solchen Vorrichtungen zu verwenden:

i) die Rückreflexe sind schmale nicht überlappende Spikes, so dass dazwischen nichts gemessen werden kann (siehe Fig. 1), und ii) die Verwendung von Laserdioden (kohärentes, monochromatisches Licht) in einer herkömmlichen Vorrichtung führt aus verschiedenen Gründen zu Interferenzen sowohl im Messsystem als auch im reflektierten Signal von der Objektoberfläche, wenn sie nicht gerade ein Spiegel ist. Als Folge: Es wird nicht in Richtung der vorliegenden Erfindung gedacht, um eine chromatisch konfokale Messvorrichtung zu entwickeln.

Aus **Fig. 2** ist ersichtlich, dass die Rückreflexverläufe erfindungsgemäß überlappen, "glatt", monoton steigend und fallend sind. Indem die Rückreflex-Glockenkurven für zwei verwendete Wellenlängen überlappen, kann aus dem Verhältnis der gemessenen Rückreflex-Intensitäten für verschiedene Wellenlängen besonders präzise ein Objektabstand berechnet werden. Überlappen hingegen die Glockenkurven nicht, siehe **Fig. 1,** so könnten vereinfacht gesagt nur so viele diskrete Abstandswerte ermittelt werden, wie Beleuchtungswellenlängen verwendet werden.

Interferenz-Effekte, wie oben dargelegt, würden eine unregelmäßige Struktur auf den Flanken der Kurven erzeugen, die auch noch zeitlich instabil wären - es würden auch viele Zwischenmaxima entstehen, so dass eine Berechnung der Distanz mit dem neuen Verfahren unmöglich werden würde. In der Regel, sobald Laser im Spiel sind, werden sie als Distanzmesser in Interferometer-Vorrichtungen, Triangulationsvorrichtungen oder Vorrichtungen, die auf dem ToF (time-of-Flight)-Messprinzip basieren, eingesetzt. Solche Verfahren und Vorrichtungen werden hier nicht gewürdigt, da sie nicht in Konkurrenz zur vorliegenden Erfindung stehen.

## Übersicht des Sensors

**Fig. 3 a)** mit der Detailskizze aus der **Fig. 3 b)** stellen eine Skizze eines gesamten Sensors gemäß einem Ausführungsbeispiel der Erfindung dar, bestehend aus einer Lichtquelle 100, einem Abstandsmessobjektiv 800, einer Farbmessvorrichtung 600, einem "X-,, oder "Y-" förmigen Optik-Faserkoppler 30, einer spektral-auflösenden Rückreflex-Messvorrichtung 500, einer spektral-auflösenden Messvorrichtung zur Erfassung der Emission der Lichtquelle 200 [dargestellt in der **Fig. 3 b)**] oder 300 oder 400 zwecks Rückführung und Regelung der Ausgangsemission der Lichtquelle, einem Strahlteiler 15, sowie der Messanordnung repräsentiert durch die Objektoberfläche 10 und ihre Grenzlagen 11 und 12 und angedeutet durch die dargestellten Strahlengänge 13 und eventuell 16.

Als Lichtquellen werden im neuen Messverfahren vorzugsweise Laserdioden 101 a, b, c verwendet, obwohl sie viele Stabilitätsprobleme aufweisen, wie nachstehend dargelegt.

Laserdioden sind thermisch sehr instabil, reagieren sehr empfindlich auf Betriebsstrom-Schwankungen und unterliegen einigen Langzeitveränderungen der technischen Spezifikation. Deshalb werden erfindungsgemäß die Wellenlänge und die Leistung jeder verwendeten Laserdiode genauestens und vor allem frei von einer möglichen Überlagerung der Emissionscharakteristik mit Rückreflexen aus dem Messsystem oder aus dem Messbereich gewählt. Die Laserdioden enthalten üblicherweise eine Photodiode genau für diesen Zweck, z.B. der Regelung der Ausgangsleistung, jedoch sind diese Photodioden aus zwei Gründen nicht geeignet, in der vorliegenden Erfindung verwendet zu werden:

a) Üblicherweise ist die Qualität dieser Photodioden nicht ausreichend für den geschilderten Zweck, da sie aus Kostengründen im selben Herstellungsprozess wie die Laserdiode hergestellt wurden, so dass sie aus physikalischen Gründen nur eine Kompromisslösung bieten,

b) Rückreflexe vom Messobjekt gelangen für gewöhnlich zurück und beeinflussen entsprechend den Arbeitspunkt der Laserdiode - was in der vorliegenden Erfindung unzulässig ist.

Dieser Problematik wird im neuen Messverfahren dadurch Rechnung getragen, dass gleich drei unterschiedliche Messmöglichkeiten der Lichtquellenemission als alternative Lösungen vorgeschlagen werden 200 **(Fig. 3 b)**, oder 300 **(Fig. 3 a),** oder 400 **(Fig. 3 a).**

Im Einzelnen werden hier die Emissionen von drei Laserdioden 101a, b, c über die Optikkomponenten 102a, b, c kollimiert, über die Strahlteiler 103, 104, 105 dichroisch addiert und über 106 in den "Port 1" (32)-Faser-Stecker 107 fokussiert. Über "Port 2" (31) gelangt die Lichtemission der Lichtquelle 100 in den Faserstecker 35 und 803, so dass das Licht 804a im Objektiv 800 über die achromatische Linse 802 kollimiert 804b und über die hyperchromatische Linsenkombination 801 (bestehend aus 801a und 801b) auf die Objektoberfläche 10 fokussiert wird, wobei die fokussierte Strahlung 13 um vorzugsweise 90° mit dem Strahlteiler 15 umgelenkt wird. Die optische Achse 805 des Objektivs 800 steht vorzugsweise senkrecht auf die optische Achse 15 der fokussierten Messstrahlung 13. Die Flächen 11 und 12 stellen schematisch die Grenzen des Messbereichs dar.

Das von der Messobjektoberfläche 10 zurückgestreute bzw. teils reflektierte Licht gelangt rückwärts über den Strahlteiler 15 und das Objektiv 800 in den Faserstecker 35, so dass über den Faser "Port 3" (33), das Licht über den Faserstecker 37/ 501 in die spektral-auflösende Messeinheit 500 gelangt. Hier wird das Licht 503a über die optische Komponente 502 kollimiert (503b) und mit Hilfe einer optischen Dispersion-Komponente 504 (hier beispielhaft ein holographisches Beugungsgitter) gemäß deren Wellenlängen in monochromatische Teilstrahlen 508a, b, c zerlegt und über die Detektoren 509a, b, c in einen messbaren elektrischen Strom umgewandelt. Die Dispersionseigenschaften der Komponente 504 müssen dabei so gewählt werden, dass die Winkel der optischen Achsen 507a, b, c der Teilstrahlen 508a, b, c zueinander ausreichend groß werden, so dass die Detektoren 509a, b, c die entsprechend separierten Teilstrahlen 508a, b, c exakt und ausschließlich jeweils erfassen können.

Die Kontrolle und Regelung der Lichtemission der Lichtquelle 100 erfolgt wellenlängen-bezogen und wird in Detail in Fig. 3 b) als "Alternative 1" dargestellt. Hier wird das Licht der Lichtquelle 100 nach der dichroischen Addition einerseits in den Stecker 107 mit der Optik 106 fokussiert und andererseits als Teilstrahl 203 mit der optischen Achse 205 auf das Dispersionselement 204.

Der Rest erfolgt ähnlich wie in der Messvorrichtung 500, d.h. die spektral-zerlegten Teilstrahlen 208a, b, c werden von den Detektoren 209a, b, c erfasst und werden über den Kontroller 23 wellenlängen-bezogen in die Lichtquelle 100 zurückgeführt. Die "Alternativlösungen 2 und 3" der Kontrolle und Regelung der Lichtemission der Lichtquelle 100 sind schematisch in der Figur 3 a) gezeigt (300 bzw. 400). 300 ist praktisch identisch mit 200, bis auf den Referenzstrahl 303a aus dem optionalen "Port 4" (34) des üblichen "Y"-Faserverzweigers 30, jetzt als "X"-Faserverzweiger ausgelegt. Für den Fall, dass 30 als ein "multi-mode Circulator" ausgelegt ist, beträgt für gewöhnlich die Ausgangsleistung aus dem "Port 4" (34) ca. 4% der Eingangsleistung vom "Port 1" (32). Die Rückführung der Lichtemission-Ist-Werte in die Lichtquelle 100 erfolgt ebenfalls wellenlängen-bezogen über einen Kontroller 23, wie in der Figur 3b) dargestellt. Für den Fall, dass die "Alternative 3" [400, **Figur 3a)]** für die Kontrolle und Regelung der Lichtquelle 100 zum Einsatz kommt, müssen die Eigenschaften des fokussierten Lichts 16 nach dem keilförmigen Strahlteiler 15 berücksichtigt werden. Somit muss es darauf geachtet werden, dass die optische Achse 17 relativ zur optischen Achse 805 versetzt und leicht verkippt vorliegt. Außerdem liegen die Foki der monochromatischen Lichtquellen, aus denen die Lichtquelle 100 besteht, verteilt auf der optischen Achse 17 zwischen den maximal erreichbaren Flächen 21 und 22, ganz ähnlich wie die Foki der monochromatischen Lichtquellen auf der optischen Achse 14 verteilt, zwischen den Flächen 11 und 12 vorliegen. Für die wellenlängen-bezogene Erfassung der Strahlung 16 ist eine ausreichend große Apertur 408 skizziert, wodurch die gesamte Strahlung zu einer nicht dargestellten Erfassungseinheit (wie 200 oder 300) geführt wird, worauf über einen Kontroller (ähnlich 23) eine Rückführung in die Lichtquelle zur Regelung erfolgt.

Das von der Objektoberfläche 10 zurückgestreute bzw. teils reflektierte Licht gelangt rückwärts über den Strahlteiler 15 in die Farbmessvorrichtung 600, wo es zunächst durch eine mit 801 identische hyperchromatische Linsenkombination 601 (bestehend aus 601a und 601b) kollimiert wird 604, um von der eigentlichen Farbmesseinheit 606 erfasst zu werden. Bedingt durch den keilförmigen Strahlteiler 15 liegt die optische Achse 605 der Farbmessvorrichtung 600 leicht versetzt und verkippt relativ zur optischen Achse 14. Zwei verschiedene Ausführungsbeispiele der Farbmessvorrichtung 600 sind auch in der **Figur 14** schematisch dargestellt.

**Beschreibung im Bereich Wellenlängenauswahl und Berechnung der Sensorkennlinie**

Um rechnerisch die Entfernung aus den zwei oder mehr unabhängigen Signalquellen des Sensors zu ermitteln, muss eine monotone Funktion aus den verfügbaren Signalquellen berechnet werden. Das erleichtert stark die Kalibrierung des Systems.

Alternativ, da alle Signalquellen gleichzeitig messbare, d.h. deutlich aus dem Rauschen hervortretende Signale liefern, können die erfassten Signalpaarungen der gerade eingestellten Messentfernung tabelarisch zugeordnet werden, wodurch auch die erforderliche Kalibrierung gleichzeitig stattfindet. Diese Methode bedarf keiner weiterer Angaben.

Wenn zwei "Glockenkurven" keine Überlappung aufweisen, ist es praktisch unmöglich eine durchgehende Sensorkennlinie aus den Messdaten zu ermitteln. Das ist der Grund dafür, dass die standardmäßige chromatisch-konfokale Entfernungsmessung, die chromatische Objektive mit einer hohen NA verwenden, Laserdioden als Lichtquelle nicht verwenden können (siehe **Fig. 1).** Für den Fall, dass eine partielle Überlappung der Glockenkurven vorliegt, erfolgt die Berechnung der Sensorkennlinie nach einer sehr bekannten Formel vom Typ $\frac{A-B}{A+B}$, bekannt auch als "Kontrast-Funktion" und welche bereits in DE 10 2008 029 459 B4 beschrieben wurde, wobei hier die Signale A und B nacheinander ermittelt und zwischenzeitig gespeichert werden mussten. Diese Art der Signalverarbeitung bleibt auch in der vorliegenden Anmeldung wichtig, weil sie sehr robust ist und normiert die informationstragende (A-B) Operation mit der Summe der Signale, so dass z.B. Einflüsse von Änderungen der Reflexionseigenschaften des Objektes weg normiert werden können. Eine solche Kontrast-Funktions-Formel bietet eine auswertbare Kennlinie nur zwischen den Spitzenwerten der Glockenkurven an, wobei im Bereich des Maximums der Glockenkurven die Nichtlinearität der Kennlinie und damit die Messunsicherheiten zunehmen. Aus diesem Grund könnte eine solche Sensorkennlinie, die nur auf diesem Prinzip basiert und aus mehreren (mehr als 2) Glockenkurven gebildet werden soll, keine ununterbrochene Abstandsmessung gleicher Auflösung zwischen den Foki der Randwellenlängen im Abstandsmessbereich anbieten. Diese Art der Auswertung ist allgemein bekannt und deshalb wird sie hier nur in Verbindung und als Ergänzung der Berechnung der Gesamt-Kennlinie des Sensors nach der Vektor-Additions-Methode beansprucht. Außerdem ist es leicht nachvollziehbar, dass die Verwendung von zwei dicht benachbarten Wellenlängen zu keiner steileren Sensorkennlinie führen kann, denn durch die Subtraktion von zwei fast identischen Glockenkurven das resultierende Signal sehr klein ist und die Steilheit der der Kennlinie dadurch nicht beeinflusst wird (siehe **Fig. 9-10).**

Aus dem Vergleich mit der Verwendung von monochromatischen Lichtquellen (Laserdioden) zusammen mit optischen Vorrichtungen nach dem SoA der CCM-Messtechnik (siehe **Fig. 1**) resultiert eindeutig, dass in einem solchen Fall keine praktisch verwertbare Sensorkennlinie ermittelt werden kann. Dagegen zeigt **Fig. 2,** dass das neue Messverfahren sicherstellt, dass eine ausreichende Überlappung von benachbarten Glockenkurven erreicht werden kann. Die Glockenkurven sind wellenlängenbedingt "rechtsschiefe Glockenkurven", d.h. die rechts vom Maximum liegende Hälfte der Glockenkurve ist breiter als die linke Seite (vgl. **Fig. 5,** WR1 > WL1, bzw. WR2 > WL2). Um eine Überlappung im Sinne des neuen Messverfahrens sicher zu stellen, müssen erfindungsgemäß die Laserdioden zweier benachbarter Wellenlängen so gewählt werden, dass sich die entsprechenden Rückreflex-Glockenkurven jeweils bei einem Intensitätswert schneiden, der größer als $1/e^2 = 0{,}1353353$ vom Intensitätsmaximum ist (s. **Fig. 5**). In dieser Figur ist dieser Grenzfall des Glockenkurven-Schnittes bei $1/e^2$ dargestellt, wobei die zwei gezeigten Kurven f1(x) und f2(x) Messdaten darstellen, wo der Wellenlängenunterschied 70nm beträgt. Im direkten Vergleich mit der **Figur 4** ist die Differenz der zwei Kurven f2(x) - f1(x) stärker nichtlinear.

Nur zwei Glockenkurven bieten eine begrenzte Möglichkeit der Entfernungsmessung, praktisch zwischen den Foki der zwei Wellenlängen ("FD1" und "FD2" in den **Figuren 4** und **5).** Aus den **Figuren 9-10** geht hervor, dass eine zu starke Überlappung zweier benachbarter Glockenkurven eher ungünstig ist, da die resultierende Kennlinie, z.B. durch die Berechnung einer "Kontrast-Funktion", eine sehr niedrige Signalamplitude liefert, da die überlappenden Glockenkurven sich gegenseitig "vernichten". Daher wird der optimale Abstand zweier benachbarten Wellenlängen vorzugsweise so definiert, dass die entsprechenden Rückreflex-Glockenkurven sich bei 50% der maximalen Intensität der normierten Glockenkurve schneiden (s. **Fig. 4**). In dieser Figur stellen die zwei gezeigten Kurven f1(x) und f2(x) Messdaten dar, wobei der Wellenlängenunterschied 45nm beträgt. Solche Glockenkurven werden üblicherweise durch deren Breite bei 50% der Maximalamplitude ("FWHM 1" und "FWHM 2" in den **Figuren 4** und **5)** beschrieben.

Es sei angemerkt, dass die longitudinale chromatische Aberration des Objektivs nichtlinear ist und somit die Wellenlängenunterschiede aus den **Figuren 4** und **5** nicht für jede verwendbare Wellenlänge gleich sind. So hat z.B. das getestete Objektiv eine nutzbare longitudinale chromatische Aberration zwischen 350nm und 980nm, aus der nur ca. 30% hier verwendet wird, um die Anzahl der Laserdioden und damit des Aufwandes klein zu halten. Aus der chromatischen Kennlinie des Objektives kann erfindungsgemäß der gewünschte Abstandsmessbereich des Sensors und an den Enden des Abstandsmessbereiches können die kleinste und die größte erforderliche Wellenlänge entnommen werden. Der dazwischenliegende Wellenlängenbereich muss so mit einzelnen Laser-Dioden-Wellenlängen abgedeckt werden, dass die entstehenden Rückreflex-Glockenkurven von benachbarten Wellenlängen sich jeweils zwischen $1/e^2$ und 50% der normierten maximalen Intensität schneiden.

**Fig. 9:** Gemessene Glockenkurven, wie $f1(x)$ und $f2(x)$, die sich im Amplitudenbereich zwischen $n(x) = 13{,}53\%$ ($I_0$) und $m(x) = 50\%(I_0)$ der normierten Spitzenamplitude $I_0$ (ca. 1000 a.u. "arbitrary units") schneiden, gelten als Glockenkurven mit der optimalen Wellenlänge, gemäß dem hier vorgeschlagenen Auswahlverfahren von benachbarten Wellenlängen der Laserdioden. Dabei kann eine geringe Nichtlinearität der Glockenkurven-Differenz $s(x) = f2(x) - f1(x)$ zwischen den zwei Brennweiten $FD1$ bzw. $FD2$ festgestellt werden.

Hier beträgt der Wellenlängenunterschied 70nm, aber dieser Wert hängt von der Wellenlänge ab, da die hyperchromatische Objektivkennlinie nicht linear von der Wellenlänge abhängt. Diese Figur zeigt außerdem den Vergleich der Funktion $s(x)$ mit der "Kontrast-Funktion" $r(x)$ zwischen den beiden gemessenen Glockenkurven. Daraus ist ersichtlich, dass die Verwendung der "Kontrast-Funktion" lokal die Messauflösung erhöht, aber reduziert den praktisch auswertbaren Messbereich zwischen den Maxima der zwei Glockenkurven. Anders formuliert: die Kontrast-Funktion liefert die steilste Kennlinie und damit die höchste Auflösung im Messbereich.

**Fig. 10:** Diese Figur zeigt graphisch, dass die Steilheit der "Differenz-Funktion" zweier benachbarten Glockenkurven weitgehendst unabhängig vom Unterschied der entsprechenden benachbarten Wellenlängen ist und dass je kleiner der Wellenlängenunterschied ist, desto kleiner auch die Amplitude der Differenz-Funktion und damit die Möglichkeit einer Auswertung ist. Der Wellenlängenunterschied für $f4(x) - f3(x)$, $f6(x) - f5(x)$ und $f8(x) - f7(x)$ beträgt jeweils 5nm, 1nm bzw. 30nm. Um die negativen Spitzen der Differenzkurven auf den gleichen Wert in Höhe von ca. -1000 a.u. zu normieren, musste der Faktor 6, 43 bzw. 4.7 mit der Differenz multipliziert werden. Die Funktion $o(x) = 0$ wurde hier nur zur Orientierung als Null-Linie im Diagramm verwendet. Die Funktion m(x) = 500 wurde ebenfalls zur Orientierung, wie auch in anderen Diagrammen, verwendet.

**Fig. 11:** Durch den kleinen Abstand zwischen den Foki $FD3$ und $FD4$ sind die beiden entsprechenden Glockenkurven fast identisch und deren Subtraktion generiert ein sehr kleines Signal (im Diagramm f4(x) - f3(x)), wobei zwischen den Wellenlängen $\lambda3$ und $\lambda4$, 5nm liegen; als Vergleich dienen die Glockenkurven um $FD1$ und $FD2$, die einen optimalen Abstand zueinander haben, wobei zwischen den Wellenlängen $\lambda1$ und $\lambda2$, 45nm liegen. Dieses Diagramm ist printipiell fast identisch mit der **Figur 10,** wobei hier der Normierungsfaktor der Glockenkurven-Differenz nicht verwendet wurde, um den Amplitudenunterschied von *f*2(*x*) - *f*1(*x*) und *f*4(*x*) - *f*3(*x*) deutlich zu machen. *FDi* sind hier, wie in anderen Diagrammen auch, die entsprechenden Brennweiten des Objektivs für die Wellenlängen $\lambda$1 bis $\lambda$4. Die Funktionen *m*(*x*) = 500 und n(*x*) = 135.3 wurden zur Orientierung unter Bezug auf die Beschreibung verwendet.

In der vorliegenden Anmeldung, unabhängig davon, ob die Lichtquellen gepulst oder im cw-Modus betrieben werden, stehen die Glockenkurven simultan zur Verfügung, was natürlich vorteilhaft ist, denn dadurch ist die maximale Reaktionsgeschwindigkeit des Sensors nur von der ReaktionsGeschwindigkeit der Photodioden und deren Verstärkern abhängig.

Eine andere Möglichkeit der Auswertung der Sensorkennlinie bietet das Logarithmieren der Glockenkurven an. In manchen Situationen mag das hilfreich sein, denn der Schnittpunkt der logarithmierten Glockenkurven wandert nach oben [siehe **Fig. 12**] und somit auch Grenzfälle auswertbar werden, aber durch das Logarithmieren wird auch das Rauschen stark verstärkt.

**Fig. 12:** In dieser Figur sind die Glockenkurven bei $\lambda$1 (Punkt-Linie) und $\lambda$2 (gestrichelte Linie) als gemessene Kurven und deren normierten logarithmischen Umrechnungen als volle Linien (normiert auf etwa 1000) dargestellt. Die logarithmierten Glockenkurven schneiden sich bei ca. 80% $I_0$ statt ca. 50% $I_0$ für die linearen Messdaten, so dass scheinbar eine Verbesserung der Sensorkennlinie möglich ist. Die Wellenlängendifferenz beträgt hier 45nm. Die Funktionen *m*(*x*) = 500 und n(*x*) = 135.3 wurden zur Orientierung unter Bezug auf die Beschreibung verwendet.

Das Logarithmieren bietet keine höhere Messauflösung [siehe **Fig. 13**]. Die Kontrast-Funktion wird nur zusätzlich zur Gesamtkennlinie **[Fig. 8]** angewandt, um eine lokal zwischen zwei benachbarten Wellenlängen verbesserte Auflösung zu erreichen. Dementsprechend wird die Gesamtkennlinie gemäß der "Vektor-Additionsmethode" zur Objektfindung verwendet und die lokale "Kontrast-Funktion" stellt eine Art Lupe für einen kleineren Bereich innerhalb der Gesamtkennlinie dar.

**Fig. 13:** In dieser Figur werden unterschiedliche Verrechnungsformel (jeweils im Diagramm angegeben) zweier benachbarter Glockenkurven verglichen, um graphisch zu zeigen, dass die "Kontrast-Funktion" *p*(*x*) die höchste Auflösung der Kennlinie liefert (steilste Kennlinie). Die Wellenlängendifferenz beträgt hier genauso wie in den **Figuren 11** und **12** 45nm. Die Funktion *o*(*x*) = 0 wurde hier nur zur Orientierung als Null-Linie im Diagramm verwendet.

Für die SoA (state-of-the-art) CCM (chromatic-confocal-measurement) ist die Verwendung einer optischen Faser mit einem möglichst kleinen Moden-Durchmesser zwingend, jedoch begrenzt auf etwa 50$\mu$m GRIN (grad-index) Faser, weil von der üblichen nichtkoheränten polychromatischen Lichtquelle zu wenig Leistung in die Faser eingekoppelt werden kann.

In der vorliegenden Erfindung werden Laserdioden verwendet und somit könnte genügend Lichtleistung selbst in SM- (single-mode) Faser eingekoppelt werden. Erfindungsgemäß werden jedoch große STIN (stufen-index) Faserdurchmesser verwendet ($\geq 50\mu m$), um sicher zu stellen, dass möglichst viele transversale Schwingungsmodi in der Faser sich ausbreiten können, denn ansonsten würden die Flanken der Rückreflex-Glockenkurven stark durchmoduliert und die Berechnung einer monotonen Sensorkennlinie erschwert. Da die Ausbreitung der transversalen Schwingungsmodi invers proportional zur Wellenlänge ist, wird auch die maximal verwendbaren Wellenlänge dadurch begrenzt. Für eine erhöhte Betriebsicherheit der vorliegenden Erfindung wird außerdem an verschiedenen Stellen des "Faser-Kopplers" 30 so genannte "moden-scrambler" eingesetzt, die ein wenig Leistung kosten, aber die Anzahl der transversalen Schwingungsmodi deutlich steigen lassen. Die Verwendung von single-mode optischen Fasern in der vorliegenden Erfindung ist nicht möglich.

## Verfahren zur Berechnung der Sensorkennlinie

Ein Verfahren zur Berechnung einer Sensorkennlinie SK wird mit Bezug auf die **Figuren 6, 7** und **8** beschrieben. **Fig. 6** zeigt eine Skizze der Vektor-Addition: Ausgehend von zwei Vektoren $\overline{A}$ und $\overline{B}$, die die Winkel $\alpha_A$ und $\alpha_B$ mit der X-Achse aufweisen, kann man die Vektorenspitzen mit deren Koordinaten beschreiben: $P_A(X_A, Y_A)$ bzw. $P_B(X_B, Y_B)$. Die Summe der Vektoren $R_\Sigma = \overline{A} + \overline{B}$ kann sowohl graphisch [wie in der **Fig. 6**] oder analytisch berechnet werden, dabei lässt sich die Spitze der Vektorsumme, ähnlich wie für die Einzelvektoren, durch ihre Koordinaten beschreiben $P_\Sigma(X_{AB}, Y_{AB})$.

Der Winkel der Vektorsumme $W_\Sigma$ lässt sich bekanntlich als *arc* tan $\dfrac{Y_{AB}}{X_{AB}}$ berechnen. Auf die Vektoraddition wird im Zusammenhang mit der Berechnung einer Sensorkennlinie zurückgegriffen.

In der **Figur 7** sind die gemessenen typischen rechtsschiefen abstandsbezogenen Rückreflex-Intensitätsverläufe (Glockenkurven) in Abhängigkeit von deren Wellenlängen bzw. Brennweiten gezeigt. Die Intensitätsverläufe sind normiert auf etwa $I_O \approx 1000$. Für jede Wellenlänge $\lambda_i$ einer monochromatischen Lichtquelle der Sensor-Lichtquelle 100 entsteht eine solche "Glockenkurve", wobei der kleinste Brennpunkt einer jeden Wellenlänge entsteht auf der optischen Achse 14 bei der Brennweite *FDi*, so dass die Brennweiten *FD*1 < *FD*2 < ... < *FD*8 ("focal distances") den Wellenlängen 405nm = $\lambda$1 < $\lambda$2 < ... < $\lambda$ 8 = 750*nm* entsprechen.

In den meisten Diagrammen, wie in **Fig. 7,** werden jeweils auch die Pegel von *m*(*x*) = 50% . $I_O$ = 500 und n(*x*) =

$1/e^2 \cdot I_O \approx 13.3\% \cdot I_O = 135.3$ angezeigt. Diese werden für die Beurteilung der Überlappung zweier benachbarten Glockenkurven verwendet.

Aus den Glockenkurven **[Fig. 7]** wurde die in FIG. 8 gezeigte Gesamt-Sensorkennlinie $WP(x)$ berechnet, die einen nichtlinearen, aber monotonen Verlauf aufweist: $WP(x) = W_\Sigma(x) = \arctan \dfrac{y_\Sigma}{x_\Sigma}$, wobei $W_\Sigma(x)$ der zahlenmäßige Wert des Winkels der Vektoraddition ist. Die Vektoren für diese Addition haben jeweils als Betrag den maximalen Wert der entsprechenden Glockenkurve und der Winkel wird wellenlängenabhängig zugeordnet. Je größer die Anzahl $i$ der Wellenlängen ist, desto glatter wird die Sensorkennlinie $WP(x)$. Die Funktion $k(x)$ entspricht hier dem asymptotischen Wert der Funktion $WP(x)$ außerhalb des Messbereichs.

**Verfahren zur Erfassung der Farbe**

Bedingt durch die wellenlängenabhängige Fokussierung kann der Bereich um den momentanen Messpunkt auf der Objektoberfläche nicht ohne weiteres mit einem weiteren Instrument, wie einer Kamera zur Visualisierung oder einem Farbmessgerät herkömmlicher Art erfasst werden, weil der vorhandene Strahlengang eine definitionsgemäße Verwendung der genannten Instrumente verhindert.

Es ist jedoch sinnvoll dieses Problem gemäß Erfindungsvarianten so zu lösen, dass der Rückreflex von der Messobjektoberfläche 10 über einen teildurchläßigen Strahlteiler 15 in das Messmodul 600 ("Sensor F") gelangt, wo er zunächst eine chromatische Einheit 601 durchläuft, die identisch mit der chromatischen Einheit 801 ist. Dadurch wird der Strahlengang 604, ähnlich wie 804b, so geformt, dass die Objektoberfläche 10 korrekt mit einer Kamera abgebildet werden kann. Das Messmodul 600 kann erfindungsgemäß in verschiedenen Ausführungsformen ausgelegt werden, die teilweise in der **Figur 14 a)**, **b),** schemenhaft dargestellt sind. Besonderes vorteilhaft ist die Verwendung eines fasergekoppelten spektral-auflösenden Messmoduls 610 (praktisch identisch mit dem Messmodul 500) zur Ermittlung der Objektoberflächenfarbe. Für diesen Zweck wird die Strahlung 604 über die Anpassungsoptik 607, in diesem Fall ein konvergierender Achromat, in die optische Faser 609 fokussiert (611) und darüber zur Analyse im spektral-auflösenden Messmodul 610 geführt. Mit 606 **[Fig. 14 a) und b)]** ist hier generisch die Komponente gekennzeichnet, die die Strahlung 604 zur Weiterverarbeitung nach dem Objektiv 601 übernimmt. Das Modul 610 [**Fig. 14 a)**] mit der dazu erforderlichen Strahlformung (607, 611, 609) ist in **Fig. 14 b)** durch ein 2D-Matrix-Lichtintensität-erfassendes Modul 608 ersetzt. Dieses kann eine Farbkamera oder ein flächiger Farbsensor sein, in dem jeder Pixel ein Farbsensor ist (für gewöhnlich für RGB-Farben). Die Anpassungsoptik 607 passt in diesem Fall den Durchmesser der Strahlung 604 an den aktiven Durchmesser des Moduls 608 an.

Allgemein kann ein Strahlteiler beliebig gestaltet sein und optional Antireflex-Beschichtungen und/oder schräg zum Strahlengang angeordnete Oberflächen aufweisen, um Rückreflexe und Interferenzen zu minimieren, bei gleichzeitig keinem oder nur kleinem optischen Versatz.

Der Strahlteiler 15 kann insbesondere als keilförmige Strahlteiler-Platte ausgelegt sein, um Interferenzeffekte zu vermeiden. Dadurch entsteht jedoch ein Strahlversatz und eine Strahlverkippung um den Apex-Winkel des Keils.

In einer Abwandlung von **Fig. 3a)** kann prinzipiell der Strahlteiler 15 zwischen der chromatischen Einheit 801 und der Linse 802 montiert werden, um das Objektiv / die chromatische Einheit 601 zu sparen. Im Fall einer (keilförmigen) Strahlteiler-Platte wird hierbei jedoch die Konstruktion des chromatischen Objektivs 800 komplizierter und es entstehen zusätzliche Aberrationen. Es könnte eine planparallele Platte eingeführt werden, die aber wiederum Interferenzen verursacht. Prinzipiell ist die Verwendung eines Strahlteiler-Würfels möglich, da dieser koaxial arbeitet und keinen Strahlversatz verursacht, wobei jedoch die flachen, auf der Strahlachse senkrechte Flächen des Strahlteiler-Würfels ungewünschte Rückreflexe verursachen können. Um dies zu verwmeiden, kann der Strahlteiler mit einer Antireflex-Beschichtung versehen sein und/oder leicht verkippt (< 8°) werden, um zwischen der chromatischen Einheit 801 und der Linse 802 montiert werden kann und eine kompaktere Bauform zu erreichen (ohne Zeichnung).

Die Messung der Objektfarbe ist komplexer und deshalb gibt es eine Reihe von zertifizierte Messverfahren, die unterschiedliche farbabhängige Kennzahlen auswerten, wofür es, untereinander, Umrechnungsformeln gibt. Das hier vorgeschlagene Messverfahren ist noch nicht bekannt und zertifiziert, da es neue Wege einschlägt und einfacher in der Anwendung ist. Dafür muss erfindungsgemäß noch die Reflektivität der Objektoberfläche mit dem Modul 614 alleine oder in Kombination mit den Modulen 610 oder 608 ermittelt werden. Für die meisten Applikationen ist es sinnvoll, dass für die Messung der Reflektivität ein Licht $L_{NIR}$ mit der Wellenlänge außerhalb des vom Distanzsensor beanspruchten Wellenlängenbereichs $\lambda_1$ bis $\lambda_n$ verwendet wird. Der Index "NIR" wurde hier im Sinne von (near-infra-red) verwendet, da eine NIR-Wellenlänge, wie z.B. 750nm optimal hierzu passt. Für die Reflektivitätsmessung können aber auch andere Wellenlängen verwendet werden. Das Licht $L_{NIR}$ (ohne Abbildung) kann von einer Lichtquelle (insbesondere einer Laserdiode oder SLED oder LED) stammen, welche koaxial im Modul 614 sitzt. Der Strahlengang 613 entsteht durch eine strahlformende Optik (ohne Abbildung), die auch im Modul 614 untergebracht ist. Die strahlformende Optik enthält auch einen Strahlteiler (ohne Abbildung), der den Rückreflex mit der Wellenlänge $\lambda_{NIR}$ einem Detektor zuführt, der die Reflektivitätsmessung ausführt. Die Reflektivitätsmessung kann komplett getrennt von der Farbmessung im schematisch dargestellten Modul 614 erfolgen, wobei in diesem Fall der Strahlteiler 612 vorteilhafterweise als Kurzpassfilter mit der Sprungwellenlänge $\lambda_{KPF}$, so dass $\lambda_n < \lambda_{KPF} < \lambda_{NIR}$ ausgelegt ist, wodurch die Strahlung 613 nur noch Wellenlängen $\lambda > \lambda_{KPF}$ enthält und somit $\lambda_{NIR}$ durchlässt.

Die Reflektivitätsmessung muss zwingend durch das hyperchromatische Objektiv 601 oder 801 erfolgen, um koaxial mit den übrigen Messungen zu erfolgen, jedoch besitzt sie eine eigene Anpassungsoptik 607, die es ihr ermöglicht, das Licht $L_{NIR}$ mit der Wellenlänge $\lambda_{NIR} > \lambda_n$, wobei $\lambda_n$ die größte im System benutzte Wellenlänge ist, so zu formen, dass es kollimiert, fokussiert oder defokussiert auf die Objektoberfläche auftrifft. Zusätzlich ist es vorteilhaft, dass die Anpassungsoptik 607 der Reflektivitätsmessung (ohne Abbildung, enthalten im Modul 614) axial beweglich und arretierbar ausgelegt wird, so dass die Lage des entstehenden Brennpunktes auf der optischen Achse 14 beliebig relativ zur Objektoberfläche 10 eingestellt werden kann.

Falls für die Erfassung des Rückreflexes mit der Wellenlänge $\lambda_{NIR}$, gemäß **Fig. 14a)** mit einem spektralauflösendem Messmodul 610 (ähnlich mit 500) erfolgt, muss es sichergestellt werden, dass die Wellenlänge $\lambda_{NIR}$ eindeutig gemessen und dass die Erfassung ohne Überlappung mit anderen Spektralanteilen der anderen Lichter erfolgt, wobei, trivial, der Strahlteiler 612 alle verwendeten Wellenlängen durchlassen muss.

Um die Reflektivitätsmessung simultan mit den anderen Messverfahren nutzen zu können, müssen sie derart separiert werden, dass sie sich nicht gegenseitig beeinflussen. Dafür sind die verwendeten Taktfrequenzen der Reflektivitätsmessung und der Distanzmessung so unterschiedlich, dass sie auch nicht mit den Oberwellen jeweils der anderen Messung übereinstimmen. Es gibt jedoch Auswerteverfahren von Signalen mit unterschiedlichen Frequenzen, die im selben System koexistieren, die von einer Synchronisierung der Signale profitieren. In diesem Fall müssen die Frequenzen so ausgewählt werden, dass die Schwebefrequenz aus der Konvolution beider Frequenzen sich stark von der gemessenen Topographie-Messfrequenz unterscheidet. Eine einfachere Situation ergibt sich, wenn die Distanzmessung im cw-Modus (continuous-wave) mit der Taktfrequenz Null erfolgt, dann kann die Reflektivitätsmessung mit einer beliebigen Frequenz operiert werden.

In der allgemeinen Beschreibung wurde zunächst das Modul 600 (= "Sensor F") als Farbsensor oder als Kamera zur Visualisierung der Objektoberfläche beschrieben. Natürlich ist es immer möglich, eine Kamera in diesem Bereich über einen eigenen Strahlteiler und eine eigene Anpassungsoptik zu integrieren. Dies wird als eine leicht ersichtliche Erweiterung des optischen Systems angesehen und deshalb ohne eine detailliertere Erklärung und ohne Zeichnungen angegeben.

Für die Auswertung der Farbinformation wird wie folgt vorgegangen:

1. Im CIE-"Farbendreieck", auch "Schuhsohlen-Diagramm" genannt, wird ein kartesisches XY-Koordinatensystem so überlagert, dass der Achsenursprung im weißen Mittelpunkt [bei den CIE-Koordinaten (ca. 0.33, ca. 0.33)] liegt (siehe **Figur 15),** wobei prinzipiell auch ein anderes Farbdiagramm verwendet werden kann;

2. Die X-Achse des neuen Koordinatensystems verbindet den Achsenursprung mit dem Punkt am Rande des Schuhsohlen-Diagramms, welcher der kleinsten im Sensor verwendeten Laser-Wellenlänge entspricht (z.B. $\lambda_1 = 450nm$, siehe **Fig. 15).** Diesem Wert wird außerdem der Winkel $\beta_1 = 0°$ zugeordnet. Die Y-Achse liegt bei $\beta = 90°$ im Uhrzeigersinn;

3. Entsprechend der übrigen im Sensor verwendeten Wellenlängen: $\lambda_2 = 520nm$, $\lambda_3 = 634nm$ werden die entsprechenden Punkte vom Rand des Schuhsohlen-Diagramms mit dem Achsenursprung verbunden; es ergeben sich die Winkel: $\beta_2 = 126°$, $\beta_3 = 248°$, welche die Richtungen der "Farb-Vektoren" $\overline{F_l}$ darstellen, die jeweils den Betrag $J_{\lambda i} = J_i =$ *gemessene Intensität der Farbe $\lambda_i$.* In der **Figur 16** ist das XY-Koordinatensystem in der üblichen Darstellungsform wiedergegeben - daraus wird außerdem sichtbar, warum die Winkelangaben im o.g. Punkt 3, bzw. in der **Figur 15,** positive Werte haben. In der **Figur 16** werden die Winkel "richtig", mit positiven Werten, gegen Uhrzeigersinn gemessen.

4. Die Farb-Vektoren $\overline{F_l}$ werden aufsummiert und ergeben einen resultierenden Vektor, der in Relation zur gerade gemessenen Entfernung $z$ gesetzt wird: $\overline{F_\Sigma}(z)$. Der Winkel $\beta_\Sigma = 44°$ ergibt sich in der **Figur 16** aus dem gezeichneten Beispiel, aber ansonsten hängt er von den verwendeten Wellenlängen und von den tatsächlich gemessenen Farbintensitäten $J_{\lambda i} = J_i$ ab.

5. Für eine korrekte Messung der Farbe muss auch die gemessene Reflektivität bei der gerade gemessenen Entfernung $Z$ berücksichtigt werden $R(z)$ (s. **Figur 17).** Die Reflektivität wird in einem 3D-Koordinatensystem xyr in dieser Figur schematisch dargestellt. Entsprechend der erfassten Reflektivität wird der unter 4 ermittelte Vektor $\overline{F_\Sigma}(Z)$

$$\varepsilon = arctan\frac{R(z)}{\sum_{i=1}^{n}|\bar{F}_i|}$$

aus der XY-Ebene um den Winkel nach oben rotiert. Die Projektion des rotierten Vektors auf die XY-Ebene liegt auf dem Vektor $\overline{F_\Sigma}(z)$ und hat den verkürzten Wert $F_{R\Sigma}(z)$ und stellt das "Farb-Messergebnis" dar. Der Winkel $\alpha$ mit der X-Achse liegt in der XY-Ebene.

**Alternative Nutzung des neuen Messverfahrens**

Das vorgestellte neue Tandem-Messverfahren (simultane Abstand- und Farbmessung) ist schnell genug, um die meisten bekannten Echtzeit-Messaufgaben in Produktionslinien zu übernehmen. Dies führt jedoch zu einer topographischen Erfassung entlang einer Linie gegeben durch den Herstellungsfluss oder durch den Roboterarm (oder Portalanlage), der den Sensor hält und bewegt.

In vielen Applikationen dieser Art wird jedoch die Erfassung einer 2D-Topographie aus zwei Gründen bevorzugt: i) Die kleine Messspotgröße erschwert die Positionierung des Sensors auf das gesuchte Merkmal des Messobjektes, und ii) Die Genauigkeit von Roboter- und Portalsystemen ist für gewöhnlich schlechter als die Genauigkeit des vorgestelten neuen Sensors und somit jede Zusatzachse, die den Sensor quer zum Herstellungsfluss bewegen würde, könnte zusätzliche Messfehler generieren. Aus dieser Begründung heraus werden hier zwei alternative ScannerVerfahren vorgestellt, die den neuen Sensor unverändert einschließen und das Spektrum der potentielen Applikationen wesentlich erweitern.

Üblicherweise enthalten die bekannten Scanner eine oder mehrere Komponenten, die mechanisch bewegt werden (weit verbreitet sind Galvanometer-Scanner und Resonanz-Scanner, die im Grunde eine schwingende hin-und-her Bewegung um einen Drehpunkt vollziehen). Solche Vorrichtungen können bei nur relativ kleinen Frequenzen (einige Hundert Hz) betrieben werden, da sie stets an den Wendepunkten der Schwingbewegung die eigene mechanische Trägheit überwinden müssen, wobei an diesen Punkten die bewegten Komponenten (z.B. Spiegel) zusätzliche Aberrationen durch die eigene mechanische Deformation unter dem Einfluß der Umkehrkräfte erzeugen.

Die hier vorgestellten Scannerverfahren sind neu hauptsächlich durch die Kombination mit dem neuen Messverfahren und weil sie auf optimaler Weise die Eigenschaften und Spezifikationen des neuen Sensor unterstützen. Somit werden in beiden Verfahren die bewegten Komponenten kontinuierlich gedreht, so dass keine Überwindung der mechanischen Trägheit benötigt wird und durch die präzise Regelung der Drehzahlen eine viel höhere Genauigkeit der Bewegung ermöglichen.

Eine weitere gemeinsame Eigenschaft der zwei hier vorgestellten Scanner betrifft die kleine NA des Sensors, der keine große Auslenkwinkel des Messstrahls durch die Scanner zulassen - beide sind sogenannte "Telezentrische" Scanner, in denen der durch den Scanner bewegte Strahlengang parallel mit sich selbst während der ganzen Bewegung bleibt. Dadurch bleibt der maximal zuläßige Kippwinkel der Objektoberfläche des Sensors alleine, auch für den Scanner erhalten.

**Variante 1: Telezentrischer Kreis-Scanner**

In der **Figur 18** ist der telezentrische Kreis-Scanner 50 als Skizze dargestellt. Er besteht aus zwei runden keilförmigen Prismen 51 und 52, die den gleichen Apex-Winkel "A" (61) haben, miteinander so starr über eine zylinderförmigen Halterung 53 gekoppelt sind, dass die schrägen Flächen der Prismen 51, 52 exakt zueinander parallel sind. Das ganze Prismen-Paket 51-53 ist drehbar gelagert um die optische Achse 57 des Sensors und kann mit einer beliebigen Antriebsart um die optische Achse 57 des Sensors präzise geregelt gedreht werden. Das ganze Prismen-Paket ist montiert zwischen dem Abstandssensor, hier angedeutet mit 58, und der Messobjektoberfläche 56 montiert.

Wenn das auf die Messobjektoberfläche 56 fokussierte Licht des Abstandsensors 58 das erste Prisma 51 passiert, wird es entsprechend dem Apex-Winkel "A" (61) umgelenkt. Dabei wird die Strahlqualität drastisch verschlechtert und die optische Achse gekippt. Bedingt durch die exakt parallel ausgerichteten Apex-Fläche des zweiten mit 51 identischen Prisma 52, sämtlich eingeführte Aberrationen und die Verkippung der optischen Achse werden komplett kompensiert. Der Brennpunkt des Sensors 58 erfährt durch das Prismen-Paket einen Versatz im Abstand "RKS" (55) von der optischen Achse 57 des Sensors. Durch die Drehbewegung 59 des Prismenpakets 51-53 entsteht so eine kreisförmige Bahn 54 auf der Messobjektoberfläche 56. Veränderungen des Abstandes "H" (60) der beiden Prismen wird der gewünschte Radius der Kreisbahn "RKS" (55) eingestellt. Wenn die beiden Apex-Flächen exakt übereinander liegen ist RKS = 0. Ferner kann der maximale Wert des Kreisbahn-Radius "RKS" (55) durch den Apexwinkel "A" (61) und durch die passende Auswahl des Brechungsindexes $n_{TKS}$ der Prismen beeinflusst werden. Während der Drehbewegung 59 bleibt die optische Achse des aufs Objekt auftreffenden Lichtes parallel mit der optischen Achse 57 des Sensors.

Um die Topographiemessung entlang der kreisförmigen Bahn 54 weiter zu verbessern, ist erfindungsgemäß notwendig, die Drehachse des Prismen-Pakets 51-52-53 gegenüber der optischen Achse des Sensors mit einem kleinen Winkel < 8° zu verkippen, um direkte Reflexe von den flachen Flächen der keilförmigen Prismen 51, 52 zu vermeiden.

**Variante 2: Telezentrischer Linien-Scanner**

In der **Figur 19** ist der telezentrische Linien-Scanner 70 als Skizze dargestellt. Er besteht aus einem würfelförmigen Prisma 71, das drehbar um die Achse 72 (senkrecht auf die Zeichenebene und auf die optische Achse des Sensors 5, gelagert ist. Das Prisma kann mit einer beliebigen Antriebsart um seine Achse 72 präzise geregelt gedreht werden. Das drehbare Prisma ist zwischen dem Abstandssensor, hier angedeutet mit 58, und der Objekt-Oberfläche 77 montiert.

Wenn das auf die Objektoberfläche fokussierte Licht des Abstandsensors 58 das Prisma 71 passiert, wird es entsprechend dem Drehwinkel "W" 73 umgelenkt. Da die Austrittsfläche des Prismas parallel mit der Eintrittsfläche ist, wird die Strahlqualität nicht verschlechtert und nach dem Austritt des Lichtes, die optische Achse 74 bleibt parallel mit der optischen Achse 57 des Sensors. Der Brennpunkt des Sensors 58 erfährt durch das Drehen des Prismas einen Versatz im Abstand "L/2" 76 von der optischen Achse 57 des Sensors. Durch die Drehbewegung des Prismas entsteht so eine lineare Bahn 75 auf der Objekt-Oberfläche 77. Veränderungen der Seitenlänge des Prismas führen zu entsprechenden Änderungen der Scannlänge "L" 75. Die Scannlänge kann auch durch Änderungen des Brechungsindexes des Prismas $n_{TLS}$ beeinflusst werden. Simulationen zur Folge können erfindungsgemäß die optischen Flächen des Prismas 71 antireflexbeschichtet werden, um einen möglichst großen Drehwinkel des Prismas ausnutzen zu können, wenn der Brechungsindex $n_{TLS} > 1.65$ ist. Im selben Zusammenhang, für einen Brechungsindex $n_{TLS} < 1.65$ wird besser auf die Antireflexbeschichtung verzichtet.

Bedingt durch die Form des Würfel-Prismas 71 erfolgen vier Linienmessungen der Objekt-Topographie pro Umdrehung des Würfel-Prismas 71. Die Ecken des Würfel-Prismas 71 sollten dabei geschwärzt werden, um die Enden der Scanlinie "L" 75 scharf abgrenzen zu können, bevor die Messsignalintensität zu sehr abnimmt. Während der Drehbewegung des Würfelprismas bewegt sich der Brennpunkt des Sensors 58 auf einer "leichten" Hyperbel-Bahn in der Ebene geformt von der optischen Achse 57 und der gedachten Scanlinie 75, wobei das Maximum der Hyperbel im Schnittpunkt mit der optischen Achse 57 befindet. Es wurde der Begriff "leichter" Hyperbel-Bahn verwendet, weil die Abweichung der tatsächlichen Bahn von einer geraden Linie gering und viel kleiner als der Höhenmessbereich des Sensors 58 ist, somit kann diese Abweichung mit einer geraden Objektfläche wegkompensiert werden. Um die Topographiemessung entlang der Linie "L" (75) weiter zu verbessern, ist es erfindungsgemäß notwendig, die Drehachse 72 des Würfelprismas 71 gegenüber der optischen Achse des Sensors mit einem kleinen Winkel < 8° zu verkippen, um direkte Reflexe von den Würfelflächen zu vermeiden.

**Bezugszeichenliste**

10  Messobjektoberfläche
11  Fokusebene der längsten verwendeten Wellenlänge (rot)
12  Fokusebene der kürzesten verwendeten Wellenlänge (blau)
13  "chromatischer" Strahlengang nach Strahlteiler (15)
14  optische Achse der Messung am Objekt
15  keilförmiger, AR-beschichteter, (z.B. R:T = 90:10) Strahlteiler
16  "chromatischer" Strahlengang zur Alternative 3_Ref.-Messung (400)
17  optische Achse der nach dem Strahlteiler zur Alternative 3_Ref.-Messung (400)
18  Winkel zwischen der Objektiv-1_OA (805) und 14 (90°)
19  Winkel zwischen der Objektiv-1_OA (805) und Objektiv-2_OA (605) (90,5°)
21  Fokusebene längste Wellenlänge (rot) Alternative 3_Ref.-Messung (400) (*)
22  Fokusebene kürzeste Wellenlänge (blau) Alternative 3_Ref.-Messung (400) (*)
(*)  Falls keine optischen Komponenten (Linsen, Filter, etc.) im Weg montiert sind
23  Wellenlängenbezogener Regler und Kontroller der Lichtquellenemission
30  "Y"-Faser-Koppler bzw. MM-"Y"-Circulator
31  "Port 2"/ Ausgangsfaser-"Y"-Koppler zum "chromatic"-Objektiv (800)
32  "Port 1"/ Eingangsfaser-"Y"-Koppler vom Laserdioden-Modul (100)
33  "Port 3" / Ausgangsfaser-"Y"-Koppler zum Messmodul (500)
34  "Port 4"/ Optionaler Y-Koppler-Ausgang zur Alternative 2_Ref.-Messung (300)
35  FC/APC-Faser-Stecker zum chromatischen Objektiv #1 (800)
36  FC/PC-Faser-Stecker zum RGB-Laserdioden-Modul (100)
37  FC/PC-Faser-Stecker zum Messmodul (500)
38  FC/PC-Faser-Stecker zum Ref.2_Messmodul (300)

**50  Telezentrischer Kreis-Scanner**

51 rundes keilförmiges Prisma mit Apex-Winkel "A" (51) und Brechungsindex $n_{TKS}$

52 rundes Keilförmiges Prisma mit Apex-Winkel "A" (51) und Brechungsindex $n_{TKS}$

53 drehbar um die optische Achse 57 gelagerte, starre Kopplung der Prismen 51 und 52

54 Draufsicht der kreisförmigen Bahn (Radius "RKS" = 55) des Brennpunktes des chromatisch konfokalen Abstandssensors (58)

55 Radius "RKS" der Scanner-Bahn auf der Objekt-Oberfläche

56 Messobjektoberfläche

57 Optische Achse des chromatisch konfokalen Abstandssensors (58)

58 chromatisch konfokaler Abstandssensor

59 angedeutete Rotation der zwei starr gekoppelten Prismen 51 und 52

60 Abstand "H" der zwei starr gekoppelten Prismen 51, 52

61 Apex-Winkel "A" der zwei starr gekoppelten Prismen 51, 52

**70 Telezentrischer Linien-Scanner**

71 würfelförmiges Prisma aus Glas mit dem Brechungsindex $n_{TLS}$

72 Drehachse des Prisma 71, senkrecht aufs Papier dargestellt

73 Drehwinkel des Prisma 71 um die Achse 72

74 Optische Achse im Messpunkt parallel mit 57

75 Bahn des Brennpunktes auf der Objekt-Oberfläche 77 während 71 dreht

76 Länge "L" der Brennpunkt-Bahn auf der Objekt-Oberfläche 77

77 Objekt-Oberfläche

**100 RGB-Laser-Modul / Lichtquelle**

101a, b, c RGB-Laserdioden

102 a, b, c Kollimationslinsen für RGB-Laserdioden

103 dichroitischer Spiegel

104 dichroitischer Spiegel

105 dichroitischer Spiegel

106 Achromat zur Strahlfokussierung in die Faser (32)

107 Faserbuchse für die Aufnahme von (36)

110 Ausgangslichtstrahl des RGB-Moduls (100)

**200 Alternative 1, Referenzmessung für LD-Feedback** [FIG. 3.b]

201 Faserstecker-Buchse für FC/PC Faserstecker

202 Kollimationslinse, Achromat

203 a, b Strahlengang vor dem Gitter (204)

204 Dispersionselement, z.B. holographisches Beugungsgitter

205 optische Achse des Strahlengangs (203)

206 Normale auf dem Beugungsgitter

207 a, b, c optische Achsen der Beugungsstrahlen

208 a, b, c Beugungsstrahlen gemäß den verwendeten Wellenlängen

209 a, b, c Photodetektoren, vorzugsweise PIN-Photodioden

210 a, b, c Transimpedanz-Verstärker

211 a, b, c Ausgänge der Transimpedanz-Verstärker (210)

**300 Alternative 2, Referenzmessung für LD-Feedback**

301 Faserstecker-Buchse für FC/PC Faserstecker

302 Kollimationslinse, Achromat

303 a, b Strahlengang vor dem Gitter (304)

304 Dispersionselement, z.B. holographisches Beugungsgitter

305 optische Achse des Strahlengangs (303)

306 Normale auf dem Beugungsgitter

307 a, b, c optischen Achsen der Beugungsstrahlen

308 a, b, c Beugungsstrahlen gemäß den verwendeten Wellenlängen

309 a, b, c Photodetektoren, vorzugsweise PIN-Photodioden

**400 Alternative 3, Referenzmessung für LD-Feedback**

408 Apertur zur Lichterfassung

| | |
|---|---|
| **500** | **Messmodul Entfernung (Lichtleistung-messende Vorrichtung)** |
| 501 | Faserstecker-Buchse für FC/PC Faserstecker |
| 502 | Kollimationslinse, Achromat |
| 503 a, b | Strahlengang vor dem Gitter (504) |
| 504 | Dispersionselement, z.B. holographisches Beugungsgitter |
| 505 | optische Achse des Strahlengangs (503) |
| 506 | Normale auf dem Beugungsgitter |
| 507 a, b, c | optische Achsen der Beugungsstrahlen |
| 508 a, b, c | Beugungsstrahlen gemäß den verwendeten Wellenlängen |
| 509 a, b, c | Photodetektoren, vorzugsweise PIN-Photodioden |
| | |
| **600** | **Chromatisches Objektiv "Farbe" und Farbmessung** |
| 601 | chromatische Einheit (Hyper-Chromat) #2 |
| 601a | konvergente Linse #2 |
| 601b | divergente Linse #2 |
| 604 | Strahlengang nach der chromatischen Einheit #2 (601) |
| 605 | optische Achse der chromatischen Einheit #2 (601) |
| 606 | Farbmessvorrichtung oder Kamera |
| 607 | Anpassungsoptik |
| 608 | 2D-Array-Sensor (CCD-Kamera oder aus Farbmesspunkten bestehend) |
| 609 | Optische Multi-Mode-Stufenindex-Faser als Verbindung 606 mit 610 |
| 610 | Spektralauflösendes Messmodul (praktisch identisch mit 500) |
| 611 | Strahlengang 604 fokussiert auf das Eintrittsfenster der Faser 609 |
| 612 | Strahlteiler: >90% transparent für 604 und >90% reflektierend für 613 |
| 613 | Strahlengang der Reflektivitäts-Messung für $\lambda_{NIR} > \lambda_n$ = größte Wellenlänge |
| 614 | Lichtquelle und Strahlformung für die Reflektivitäts-Messung mit $\lambda_{NIR}$ |
| | |
| **800** | **Chromatisches Objektiv "Entfernung"** |
| 801 | chromatische Einheit (Hyper-Chromat) #1 |
| 801a | konvergente Linse #1 |
| 801b | divergente Linse #1 |
| 802 | Kollimator-Linse, Achromat |
| 803 | FC/APC - Faserstecker-Buchse |
| 804a, b | Strahlengang innerhalb des Objektivs #1 (800) |
| 805 | optische Achse des chromatischen Objektives #1 |

**Patentansprüche**

1. Abstandsmessverfahren nach dem Prinzip der chromatisch konfokalen Entfernungsmessung, **dadurch gekennzeichnet, dass**

    eine polychromatische Lichtquelle (100) mehrere single-mode oder multi-mode, gepulst- oder dauer-betriebene Laserdioden (101a, b, c) umfasst, dass das so gewonnene Licht (110) in einen multi-mode "Y"- oder "X"-förmigen Spleiß-Faserkoppler (30) mit Faserkerndurchmesser von mindestens 50$\mu$m, vorzugsweise als "Multi-mode Circulator" ausgelegt, fokussiert wird, dass eine Ausgangsfaser des Faserkopplers (30) über einen FC/APC-Faserstecker (35, 803) in ein chromatisches Objektiv (800) eingeführt wird,
    dass die Wellenlängen des Lichts (110) der Lichtquelle (100) in distinkte Brennpunkte auf der optischen Achse (14) in unterschiedlichen Entfernungen gemäß einer longitudinalen chromatischen Aberrationskennlinie des Objektivs (800) so fokussiert werden, dass ein entstehender Rückreflex von einer optischen zumindest teilweise reflektierenden Messobjektoberfläche (10), die in 90°±arctan(NA), annähernd senkrecht, zur optischen Achse zwischen den Foki der kürzesten und längsten verwendeten Laserdioden-Wellenlänge liegt, über das chromatische Objektiv (800) zurück in den Faserkoppler (30) gelangt und über eine Messausgangsfaser (33) des Faserkopplers (30) einer spektral-auflösenden, Lichtleistung-messenden Vorrichtung (500) zugeführt wird, welche jede der verwendeten monochromatischen Wellenlängen separat misst.

2. Verfahren zur Auswahl der geeigneten Laserdioden (101a, b, c) bzw. deren Wellenlängen zur Umsetzung des chromatisch konfokalen Abstandsmessverfahrens nach Anspruch 1, wobei ein Sensor die polychromatische Lichtquelle (100), den Faserkoppler (30), den Faserstecker (35, 803), das chromatische Objektiv (800) und mindestens eine Photodiode (509a, b, c) enthält,

wobei der Sensor für jede Laserdioden-Wellenlänge den konfokalen Rückreflex mit der Form einer rechtsschiefen Intensitätsverteilung über die optische Achse des Sensors und mit dem maximalen Wert im koaxialen Fokus des Sensors für die gewählte Wellenlänge erfasst, **dadurch gekennzeichnet, dass** die kleinste und die größte Wellenlänge so gewählt werden, dass ein gewünschter Abstandsmessbereich zwischen den Foki der kleinsten und größten Wellenlängen gemäß der chromatischen Kennlinie des Objektivs (800) liegt, und dass zur lückenlosen Messung der Entfernung innerhalb des Abstandsmessbereichs eine Mindestanzahl von zusätzlichen Laserdioden (101a, b, c), deren Emissionswellenlängen zwischen der kleinsten und größten gewählten Wellenlänge liegen, so ausgesucht wird, dass sich resultierende Rückreflex-Glockenkurven zweier benachbarter Wellenlängen jeweils bei einem Intensitätswert schneiden, der größer als $1/e^2 = 0{,}13533$ von einem Intensitätsmaximum einer dieser Wellenlängen ist.

3. Verfahren nach Anspruch 1 oder 2, **dadurch gekennzeichnet, dass** das Verfahren als Teil eines interferometrischen Messverfahrens ausgeführt wird.

4. Verfahren zur Ermittlung einer monotonen Sensorkennlinie aus Messsignalen zu verschiedenen Abständen einer Messobjektoberfläche (10), wobei die Sensorkennlinie zur Kalibrierung für das Abstandsmessverfahren nach Anspruch 1 oder das Verfahren nach einem der Ansprüche 2 und 3 verwendet wird, **dadurch gekennzeichnet, dass** jedem Messsignal mit Wellenlänge $\lambda_i$ ein Vektor $\overline{R_i}$ so zugeordnet wird, dass der Vektor-Betrag der Messsignalgröße $I_{\lambda i} = I_i$ entspricht und dass der Vektor-Winkel $\alpha_{\lambda i} = \alpha_i$ zu einer waagerechten Achse in einem kartesischen Koordinatensystem einem Wert entspricht, der entsprechend der Wellenlänge so zugeordnet wird, dass der kleinsten ver-wendeten Wellenlänge $\lambda_1$ insbesondere $\alpha_1 = 0°$, der größten Wellenlänge $\lambda_n$ insbesondere $\alpha_n = 90°$ und den übrigen Wellenlängen dazwischenliegende Winkel $\alpha_2$ bis $\alpha_{n-1}$ entsprechend einem zahlenmäßigen Verhältnis der Wellenlängen zugeordnet werden, wobei zur Berechnung einer monotonen Sensorkennlinie über den gesamten Arbeitsmessbereich zwischen den Foki der kleinsten und größten verwendeten Wellenlänge die Vektoren $\overline{R_i}$ vektormäßig aufsummiert werden und der Winkel $W_\Sigma(\overline{z})$ des resultierenden Vektors $\overline{R_\Sigma}$ als oder für die z-abhängige Sensorkenn-

$$W_\Sigma(z) = \arctan\frac{y_\Sigma}{x_\Sigma}$$

linie verwendet wird, wobei der Winkel des resultierenden Vektors ist, und wobei z die axiale Messkoordinate,

$$y_\Sigma = \sum_{i=1}^n I_i \sin\alpha_i, \quad x_\Sigma = \sum_{i=1}^n I_i \cos\alpha_i \text{ sind.}$$

5. Verfahren gemäß Anspruch 4, **dadurch gekennzeichnet, dass** der Winkel $W_\Sigma(z)$ zur Linearisierung mit dem Betrag des resultierenden Vektors $B_\Sigma(z) = \sqrt{x_\Sigma^2 + y_\Sigma^2}$ normiert und mit $S_\Sigma(z) = \frac{W_\Sigma(z)}{B_\Sigma(z)}$ bezeichnet wird, wobei $S_\Sigma(z)$ als die z-abhängige Sensorkennlinie verwendet wird.

6. Verfahren gemäß einem der Ansprüche 1 bis 5, **dadurch gekennzeichnet, dass** das Objektiv (800) mit einer kleinen numerischen Apertur NA < 0.2 und einem Verhältnis der longitudinalen chromatischen Aberration zu seiner Brennweite für die kürzeste verwendete Wellenlänge von 0.15 bis 0.5 ausgelegt ist.

7. Verfahren gemäß Anspruch 6, **dadurch gekennzeichnet, dass** das Objektiv (800) entweder aus einer achromatischen Kollimationslinse und einer koaxial montierten hyperchromatischen Kombination von zwei räumlich getrennten optischen Komponenten oder nur aus einer solchen hyperchromatischen Kombination von optischen Komponenten besteht.

8. Verfahren gemäß Anspruch 7, **dadurch gekennzeichnet, dass** die hyperchromatische Kombination aus zwei optischen, koaxial und räumlich getrennten Komponenten besteht, wobei die Komponenten entweder zwei refraktive, oder eine refraktive und eine diffraktive optische Komponente sind.

9. Verfahren gemäß einem der Ansprüche 1 bis 8, **dadurch gekennzeichnet, dass** zur gleichzeitigen Erfassung einer Objektfarbe, im Strahlengang zwischen dem Objektiv (800) und der Messobjektoberfläche (10) oder zwischen der Linse (802) und der chromatischen Einheit (801) ein Breitband-Strahlteiler (15) eingesetzt wird, wobei der Breitband-Strahlteiler (15) einen leistungsmäßigen Teil des von der Messobjektoberfläche (10) reflektierten Lichtes in Richtung einer Farbmessvorrichtung (606) umlenkt, und dass der Strahlteiler (15) zur Vermeidung von Reflexen und/oder Etalon-Effekten insbesondere als keilförmiger Strahlteiler ausgelegt wird, insbesondere mit einem Keilwinkel von 0.5°.

10. Verfahren gemäß einem der Ansprüche 1 bis 7 oder 9, **dadurch gekennzeichnet, dass** das von der Messobjektoberfläche (10) zurückreflektierte Licht ohne eine begrenzende Apertur zu passieren, einer spektralauflösenden Messvorrichtung (606) zugeführt wird, die für jede verwendete Wellenlänge ein Intensitätssignal an eine übergeordnete Signalauswerteeinheit liefert.

11. Verfahren gemäß einem der Ansprüche 2 bis 5, 9 oder 10, **dadurch gekennzeichnet, dass** zur Auswertung einer erfassten Farbinformation jedem Messsignal mit der Wellenlänge $\lambda_i$ ein Vektor $\overline{F_i}$ so zugeordnet wird, dass der VektorBetrag der Messsignalgröße $J_{\lambda i} = J_i$ entspricht und dass der Vektor-Winkel $\beta_{\lambda i} = \beta_i$ zu einer waagerechten Achse in einem kartesischen Koordinatensystem einem Wert entspricht, der entsprechend der Wellenlänge so zugeordnet wird, dass der kleinsten verwendeten Wellenlänge $\lambda_1$ ein erster Vektor-Winkel $\beta_1$ und den übrigen Wellenlängen $\lambda_2$ ... $\lambda_n$ die Winkel $\beta_2$ bis $\beta_n$ entsprechend Wellenlängen-Angaben auf dem Rand des Farbdiagramms zugeordnet werden, wobei die Null des kartesischen 2D-Koordinatensystems im weißen, das heißt unbunten, Zentrum des Farbdiagramms liegt, und dass die Vektoren $\overline{F_i}$ vektormäßig zu einem resultierenden z-abhängigen Vektor $\overline{F_\Sigma}(z)$ aufsummiert werden, welcher anschließend für die Berücksichtigung der erfassten Objekt-Reflektivität $R(z)$, mit seinem Ursprung im Ursprung des XY-kartesischen Koordinatensystems aus der XY-Ebene mit dem Winkel $\varepsilon =$

$$arctan \frac{R(z)}{\sum_{i=1}^{n} |\bar{F}_i|}$$ ausgeschwenkt wird, und als Farb-Messergebnis $F_{R\Sigma}(z)$ die Länge der Strecke vom Ursprung des kartesischen Koordinatensystems bis zur Projektion der Spitze des geschwenkten Vektors $\overline{F_\Sigma}(z)$ auf die XY-Ebene verwendet wird, wobei z die axiale Messkoordinate der Objektoberfläche und $\alpha$ der Winkel des resultierenden Vektors mit der x-Achse sind.

12. Verfahren gemäß Anspruch 11, **dadurch gekennzeichnet, dass** das Farbdiagramm ein Schuhsohlen-Farbdiagramm ist und dass $\beta_1 = 0°$ für die kleinste verwendete Wellenlänge gilt.

13. Verfahren gemäß Anspruch 11 oder 12, **dadurch gekennzeichnet, dass** das z-abhängige "Sensor F" (600)-Farbmessergebnis $F_{R\Sigma}(z)$ zur Linearisierung mit der geometrischen Summe der spektralen Vektor-Beträge

$$BF_\Sigma(z) = \sqrt{\sum_{i=1}^{n} |\bar{F}_i|^2}$$ normiert und mit $$SF_\Sigma(z) = \frac{F_{R\Sigma}(z)}{BF_\Sigma(z)}$$ bezeichnet wird, wobei $SF_\Sigma(z)$ zur Auswertung der erfassten Farbinformation verwendet wird,

14. Verfahren gemäß einem der Ansprüche 11 bis 13, **dadurch gekennzeichnet, dass** im Falle von Objekten mit einer Oberfläche, die das Licht (13) unterschiedlich diffus bis hin zu spiegelnd zurückwirft, ein weiteres Licht $L_{NIR}$ außerhalb des sichtbaren Wellenlängenbereichs so in den Strahlengang um die optische Achse (14) eingespiegelt wird, dass es, vorzugsweise kollimiert, auf die Messobjektoberfläche (10), um den Messpunkt auftrifft, und dass insbesondere vorgesehen ist, dass das zusätzliche Licht $L_{NIR}$ ebenfalls wellenlängenselektiv in der Farbmessvorrichtung (606) erfasst wird und dass die gemessene Intensität $J_{NIR}$, die der Objekt-Oberflächen-Reflektivität entspricht, zur Korrektur und Kalibrierung des Farb-Messergebnisses $F_{R\Sigma}(z)$ verwendet wird.

15. Sensor, eingerichtet zur Durchführung des Verfahrens nach Anspruch 2 oder einem der Ansprüche 3 bis 14, wenn diese auf Anspruch 2 bezogen sind, wobei der Sensor die polychromatische Lichtquelle (100), den Faserkoppler (30), den Faserstecker (35, 803), das chromatische Objektiv (800) und mindestens die Photodiode (509a, b, c) enthält.

Fig. 1

Fig. 2

Fig. 3 a)

Fig. 3 b)

Fig. 4

Fig. 5

Fig. 6

$$\overline{R_{\lambda i}} = \begin{pmatrix} I_{O,\lambda i} \cos \alpha_i \\ I_{O,\lambda i} \sin \alpha_i \end{pmatrix}$$

Fig. 7

Fig. 8

$$r(x) = 1000 \cdot \frac{f2(x) - f1(x)}{f1(x) + f2(x)}$$

$$s(x) = f2(x) - f1(x)$$

Fig. 9

Fig. 10

Fig. 11

Fig. 12

Fig. 13

a)

b)

Fig. 14

Fig. 15

Fig. 16

Fig. 17

Fig. 18

Fig. 19

Europäisches
Patentamt

European
Patent Office

Office européen
des brevets

# EUROPÄISCHER RECHERCHENBERICHT

Nummer der Anmeldung

EP 25 16 1316

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2004 022454 B4 (CARL MAHR HOLDING GMBH [DE]) 5. Juni 2014 (2014-06-05) | 1,3,10, 15 | INV. G01B11/06 |
| A | * das ganze Dokument * | 2,4-9, 11-14 | G01B11/24 G01B21/04 |
| | ----- | | G01J3/46 |
| A,D | DE 10 2008 029459 A1 (MEL MIKROELEKTRONIK GMBH [DE]) 4. Februar 2010 (2010-02-04) * das ganze Dokument * | 1-15 | G01N21/25 G02B21/00 |
| | ----- | | |

RECHERCHIERTE
SACHGEBIETE (IPC)

G01B
G01N
G01J
G02B

Der vorliegende Recherchenbericht wurde für alle Patentansprüche erstellt

| Recherchenort | Abschlußdatum der Recherche | Prüfer |
|---|---|---|
| München | 3. Juli 2025 | Stanciu, C |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                EP 25 16 1316

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-07-2025

| Im Recherchenbericht angeführtes Patentdokument | Datum der Veröffentlichung | Mitglied(er) der Patentfamilie | Datum der Veröffentlichung |
|---|---|---|---|
| DE 102004022454 B4 | 05-06-2014 | CN 1950670 A | 18-04-2007 |
| | | DE 102004022454 A1 | 01-12-2005 |
| | | JP 4929161 B2 | 09-05-2012 |
| | | JP 2007536535 A | 13-12-2007 |
| | | US 2008030743 A1 | 07-02-2008 |
| | | WO 2005108919 A1 | 17-11-2005 |
| DE 102008029459 A1 | 04-02-2010 | DE 102008029459 A1 | 04-02-2010 |
| | | WO 2009153067 A2 | 23-12-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3013467 A, M. Minsky
- FR 2738343 A1, Joseph Cohen Sabban
- DE 102008029459 B4
- WO 2009153067 A2, M. Jurca
- DE 102004022454 A1
- DE 102006026775 A1
- DE 202019103527 U1
- US 5785651 A

**In der Beschreibung aufgeführte Nicht-Patentliteratur**

- **G. MOLESINI et al.** FOCUS-WAVELENGTH ENCO-DED OPTICAL PROFILOMETER. *OPTICS COM-MUNICATIONS*, 1984, vol. 49 (4)
- **M. JURCA et al.** Eine Alternative zum Laser. *Sensormagazin*, 1997, vol. 4 (97), 15-18